Europäisches Patentamt

European Patent Office

Office européen des brevets

(19)

(11) **EP 1 450 304 A1**

(12)     **EUROPEAN PATENT APPLICATION**

(43) Date of publication:
     **25.08.2004   Bulletin 2004/35**

(51) Int Cl.[7]: **G06T 7/00**

(21) Application number: **03251050.5**

(22) Date of filing: **21.02.2003**

(84) Designated Contracting States:
     **AT BE BG CH CY CZ DE DK EE ES FI FR GB GR
     HU IE IT LI LU MC NL PT SE SI SK TR**
     Designated Extension States:
     **AL LT LV MK RO**

(71) Applicant: **City University of Hong Kong
     Hong Kong (CN)**

(72) Inventors:
     • **Liew, Alan Wee-Chung
       Dep. of Computer Engineering
       83 Tat Chee Ave Kowloon Tong Hong Kong (HK)**

     • **Yan, Hong Dep. of Computer Engineering
       83 Tat Chee Ave Kowloon Tong Hong Kong (HK)**
     • **Yang, Mengsu Dep. of Computer Engineering
       83 Tat Chee Ave Kowloon Tong Hong Kong (HK)**

(74) Representative: **Martin, Philip John
       Marks & Clerk
       66-68 Hills Road
       Cambridge, Cambridgeshire, CB2 1LA (GB)**

(54)     **Image processing apparatus and method**

(57)     This invention is generally concerned with image processing methods, apparatus and computer program code, and more particularly with processing images from microarrays such as DNA microarrays.

We describe method of processing a digital image input comprising data representing a plurality of spots to generate data for defining a grid to subdivide said image to substantially separate at least some of the spots, the method comprising: generating a sequence of thresholded digital images from said digital image input using a progressively reduced threshold for each successive thresholded image of the sequence; processing each of said thresholded images to removed components of said images not corresponding to potential spots; sequentially combining said processed thresholded images to form a combined image such that a spot in an image with a lower threshold is not included in said combined image if a corresponding spot in an image with a higher threshold is detected; and generating said grid data to substantially separate spots in said combined image.

Figure 1b

**Description**

This invention is generally concerned with image processing methods, apparatus and computer program code, and more particularly with processing images from microarrays such as DNA microarrays.

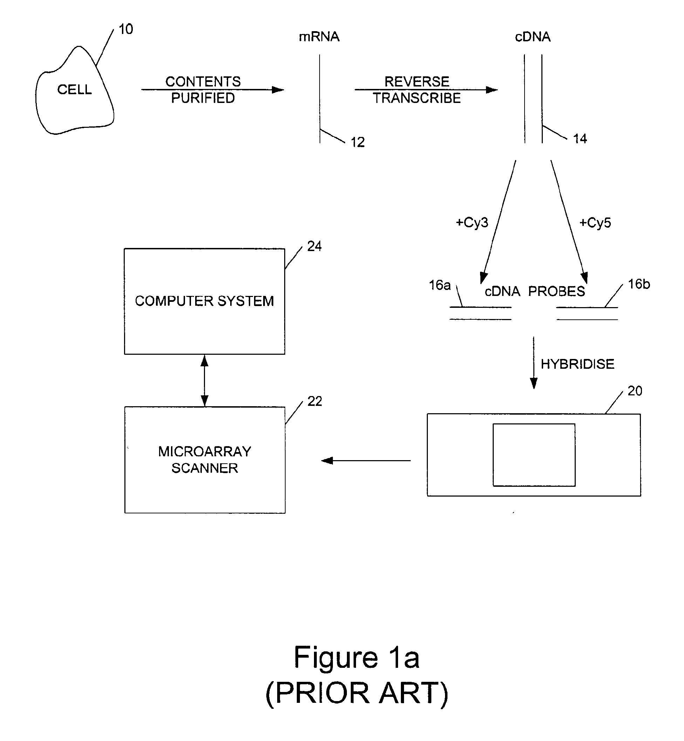

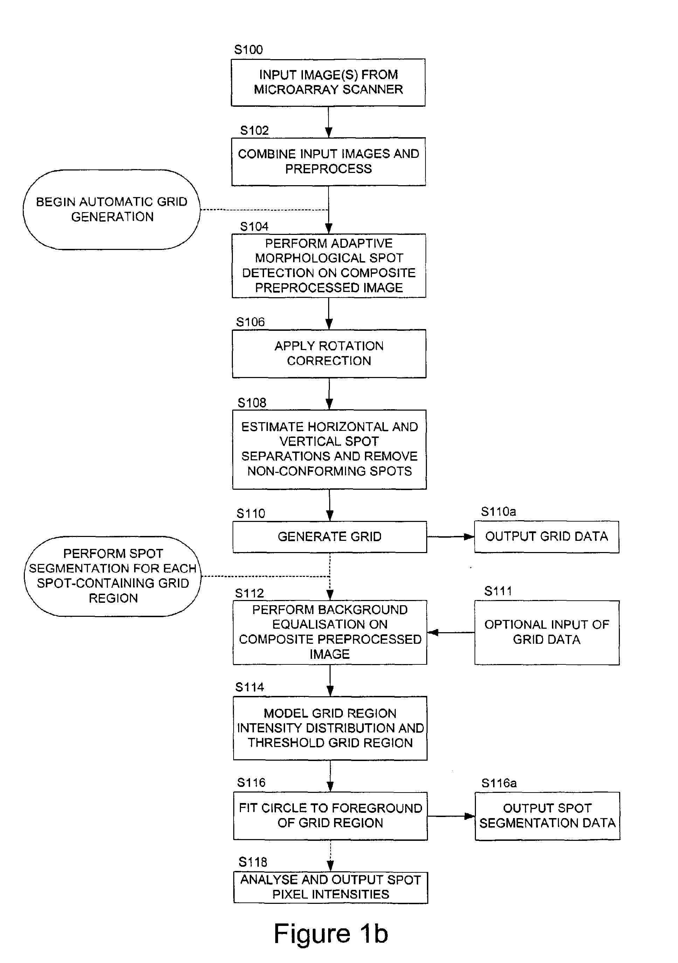

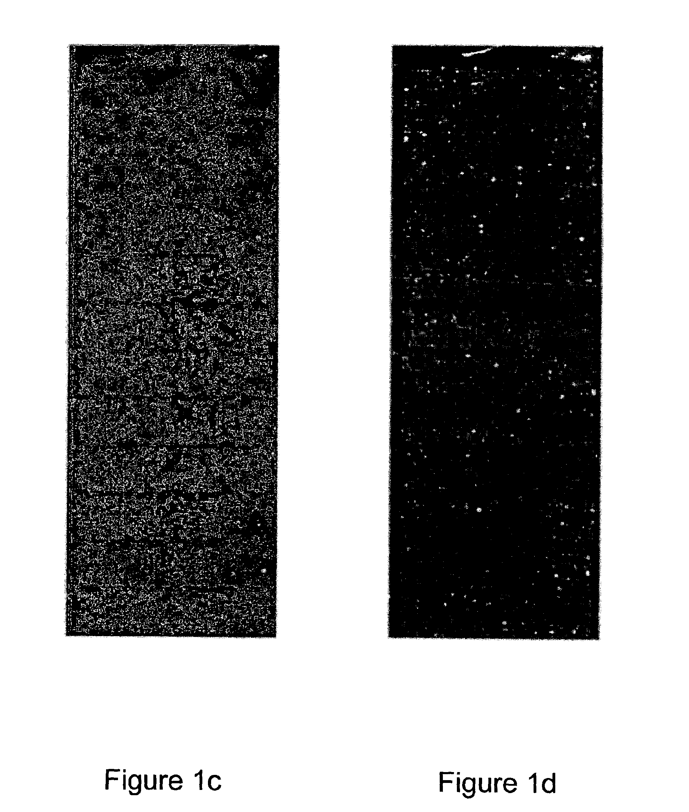

Microarray technology which allows massively parallel, high throughput profiling of gene expression in a single hybridization experiment, has recently emerged as a powerful tool for genetic research - S.K. Moore, "Making Chips", IEEE Spectrum, March 2001, pp.54-60. The technology allows the simultaneous study of tens of thousands of different DNA nucleotide sequences on a single microscopic glass slide, the so-called DNA chip. In addition to the enormous scientific potential of DNA microarrays to help in understanding gene expression, gene regulation and interactions, it also has very important applications in pharmaceutical and clinical research. By comparing gene expression in normal and disease cells, microarrays can be used to identify disease genes and targets for therapeutic drugs. Figure 1 shows a schematic diagram of an example of a microarray experiment.

In figure 1, two sets of mRNA are extracted from corresponding cell lines or tissues. One set is from the normal sample and constitutes the control. The other set is from the treated sample. The cDNA are reversed transcribed from mRNA of each sample separately and labeled with different fluorescent dyes (usually Cy3 and Cy5) to constitute the cDNA probes 16a, b. The two labeled cDNA probes are then purified and mixed in equal ratio for microarray hybridization. The hybridized microarray is washed and scanned by a laser scanner.

A microarray typically holds hundreds or thousands of spots, each of which contains a different DNA sequence. Protein microarrays, tissue arrays and cell arrays are also available and the image processing techniques to be described below can also be applied to images of these arrays. The spots are generally printed onto a glass slide 20 by a robotic arrayer; at present a slide may contain of order $10^4$ spots. The DNA in the spots is bonded to the glass to keep it from washing off during the hybridization reaction. If a probe contains a cDNA whose sequence is complementary to the DNA on a given spot, that cDNA will hybridize to the spot, where it will be detectable by its fluorescence.

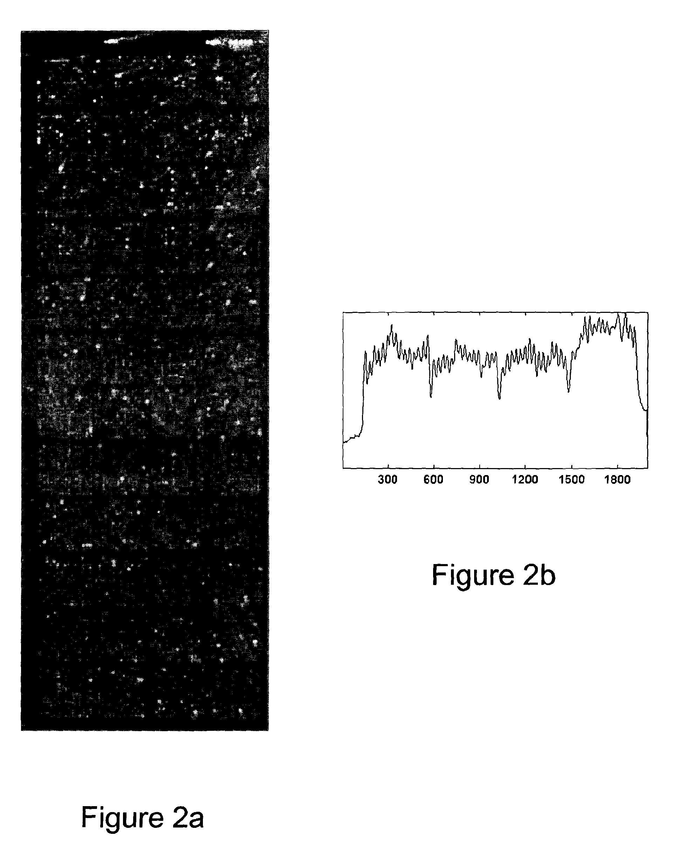

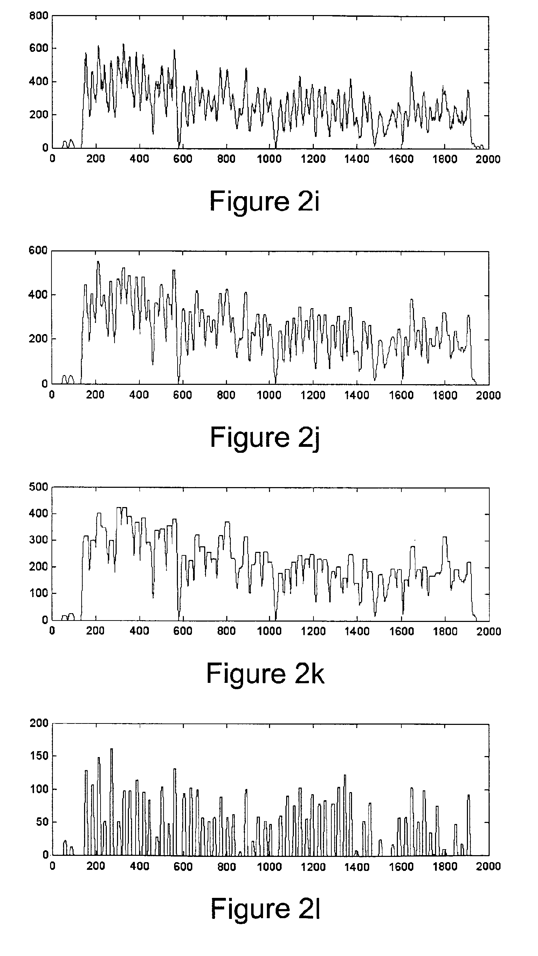

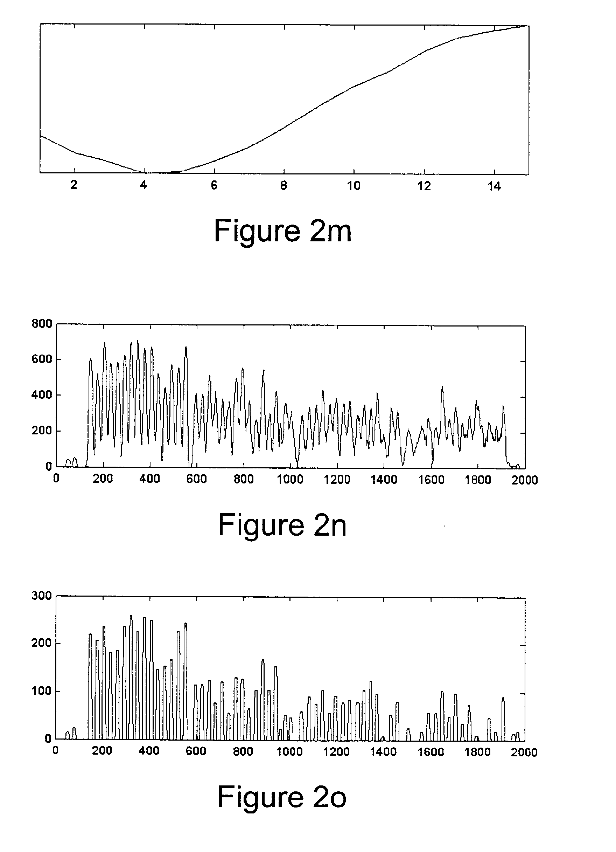

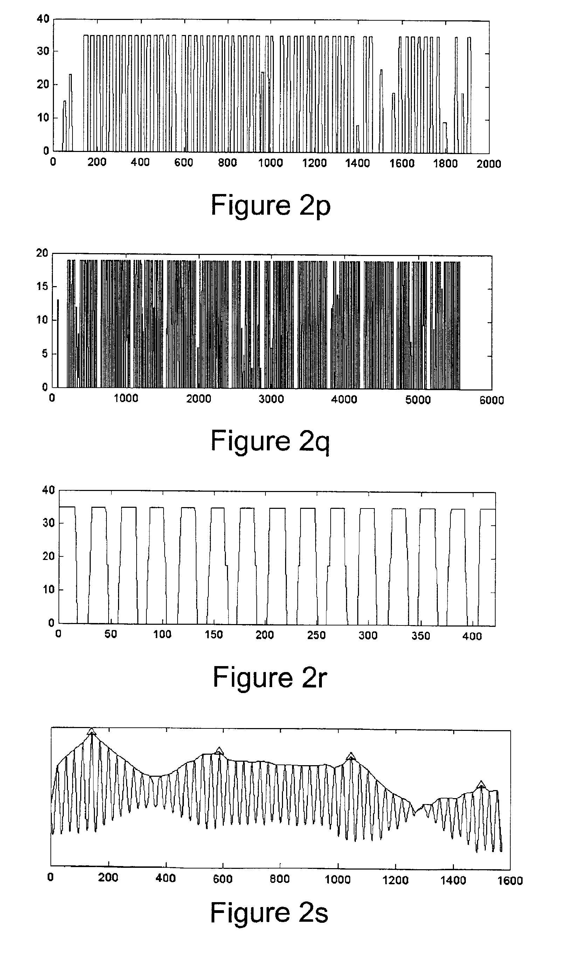

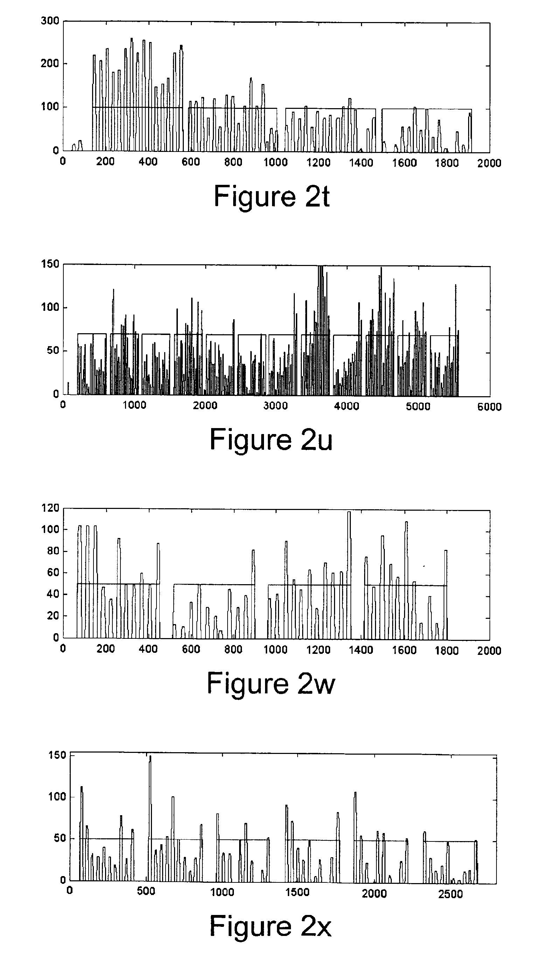

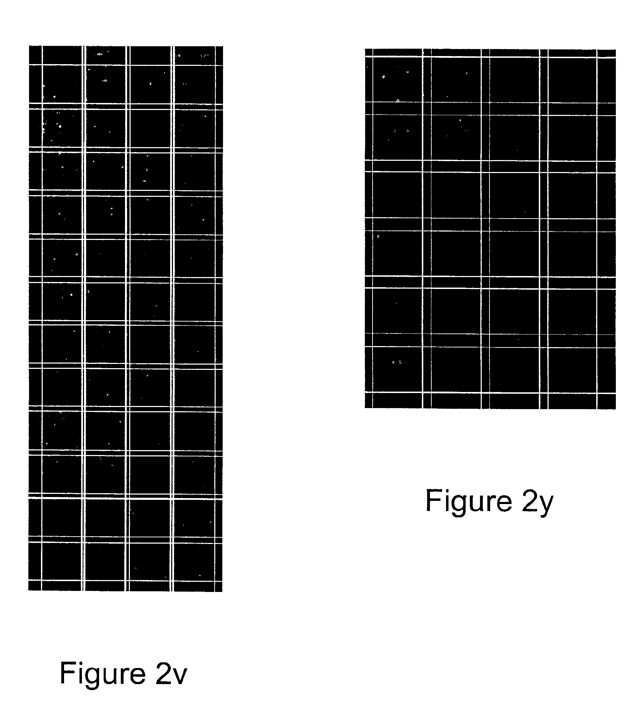

Once the cDNA probes have been hybridized to the array and any loose probe has been washed off, the array is scanned by a laser scanner 22 typically at a pixel resolution of 10μm or better, to determine how much of each probe is bound to each spot. The hybridized microarray is scanned with laser excitation at a red wavelength (generally approximately 635nm for the cyanine 5, Cy5 dye) and the green wavelength (generally approximately 530nm for the cyanine 3, Cy3 dye), which produces two sets of images, typically in 16 bits TIFF format. Other dyes, such as Alexa dyes and other wavelengths may also be used. Examples of suitable laser scanners are the G2565DA DNA Microarray Scanner available from Agilent of California, USA and the GenePix 4000B scanner from Axon Instruments Inc. of California, USA. The image data may be sent to a computer system 24, for analysis, or an image processing system may be included within scanner 22. An example of a microarray fluorescence image is given in figure 2a, described later. Spots with more bound probes will have more fluorescent dyes and will therefore fluoresce more intensely. The ratio of the two fluorescence intensities at each spot indicates the relative abundance of the corresponding DNA sequence in the two cDNA samples that are hybridized to the DNA sequence on the spot. Gene expression study can therefore be done by examining the expression ratio of each spot in the Cy3 and Cy5 images.

Due to the large amount of data, computer analysis of microarray images has become indispensable. It is further desirable to be able to automatically "quantify" each spot to provide information about the relative extent of hybridization of the two cDNA samples, a process known as quantitation. However, automatic and reliable analysis of microarray images has proved to be difficult due to the poor contrast between spots and background, and the many contaminations/artifacts arising from the hybridization procedures such as irregular spot shape and size, dust on the slide, large intensity variation within spots and background, and nonspecific hybridization.

On a microarray image, the spots occupy a relatively small fraction of the image area, and to extract data from the image these spots are individually found, and separated or segmented from the background, for example, for later quantitation.

The spots on a microarray are printed in a regular pattern: an array image will contain $N \times M$ blocks, where each block will contain $p \times q$ spots. All the $N \times M$ blocks on each array are printed simultaneously by repeatedly spotting the slide surface with a set of $N \times M$ print-tips, stepped along to print corresponding spots simultaneously in different blocks. The relative placement of adjacent blocks is therefore determined by the spacing between adjacent print-tips. Adjacent spots inside each block are separated during printing by slightly offsetting the print-tips after each spotting.

Although precise robotic arrayers are used nowadays to ensure precise positioning during printing, variations in spot positions cannot be avoided totally. The positional variations become significant when very high density printing is carried out, since the size of each spots is in the μm range. Differences in the sizes of transferred drops on the print-tips also cause variations in spot size and shape. The post-hybridized slide treatments, such as washing off unhybridized cDNA with buffer and slide drying, also create image artifacts that further complicate the spot segmentation task.

The spot segmentation task usually involves the following steps: (1) preprocess the pair of microarray images, (2) identify the location of all blocks on the microarray image, (3) generate a grid within each block to subdivide the block into $p \times q$ subregions, each containing at most one spot, and (4) segment the spot, if any, in each subregion.

Since the basic geometrical structure of the microarray image is specified by the robotic arrayer, useful structural constraints can be placed on the spot segmentation problem. Specifically, the number of blocks in a microarray image, the separation between blocks, the number of spots within each block, the separation between adjacent spots, and the ideal spot shape and size are usually known beforehand. This information can be used to assist the image analysis task and to verify the correctness of the results.

Background prior art relating to the processing of image data from a microarray can be found in Y.H. Yang, M.J. Buckley, S.Dudoit and T.P. Speed, "Comparison of Methods for Image Analysis on cDNA Microarray Data", Technical Report #584, November 2000, Department of Statistics, University of California at Berkeley; S.M. Bhandarkar and T. Jiang, "Automated Analysis of DNA Hybridization Images", Proceedings of the Fifth IEEE Workshop on Applications of Computer Vision, 2000, pp. 126-131; S.M. Bhandarkar, T. Jiang, K. Verma and N. Li, "Image Analysis for High Throughput Genomics", Proceedings of 2001 International Conference on Image Processing, ICIP2001, Vol. 2, pp. 285-288; P. Arena, L. Fortuna and L. Occhipinti, "DNA Chip Image Processing via Cellular Neural Networks", Proceedings of the 2001 IEEE International Symposium on Circuits and Systems, ISCAS2001, Vol. 2, pp. 345-348; M. Steinfath, W. Wruck, H. Seidel, H. Lehrach, U. Radelof and J. O'Brien, "Automated Image Analysis for Array Hybridization Experiments", Bioinformatics, Vol. 17, No. 7, 2001, pp. 634-641.

A number of commercial and academic software packages are also available for microarray image data processing. These include ScanAlyze (M. Eisen, "ScanAlyze User Manual", Stanford University,1999, http://rana.lbl.gov/EisenSoftware.htm); GenePix (Axon Instruments Inc. *GenePix Pro 3.0*, 2001), QuantArray (Packard BioChip Technologies, LLC, QuantArray Mocroarray Analysis Software; Yale Microarray Database, Yale University, "Direction for Using Quantarray Microarray Analysis Software" http://info.med.yale.edu/microarray/quantarray.pdf); Dapple (J. Buhler, T.Ideker and D. Haynor, "Dapple: Improved Techniques for Finding Spots on DNA Microarrays", Technical Report UWTR 2000-08-05, University of Washington); Spot (M. Buckley, "The Spot User's Guide", CSIRO Mathematical and Information Sciences, Australia, http://www.cmis.csiro.au/iap/spot.htm); DeArray - Scanalytics MicroArray suite (Y. Chen, E.R. Dougherty, and M.L. Bittner, "Ratio-based decisions and the Quantitative Analysis ofcDNA Microarray Images", Journal of Biomedical Optics, Vol. 2, 1997, pp.364-374, http://www.nhsri.nih.gov/DIR/LCG/15K/HTML/img analysis.html), and MatArray (X. Wang, S. Ghosh and S.W. Guo, "Quantitative Quality Control in Microarray Image Processing and Data Acquisition", Nucleic Acids Research, Vol. 29, No. 15, 2001, e75). These generally identify a spot based upon assuming a geometry for the spot as a circle and, in some cases, adapting this geometry. Spot segmentation methods based upon histogram analysis and adaptive thresholding (QUANTARRAY, DEARRAY and MATARRAY) or edge detection (DAPPLE) or region growing (SPOT).

Although software is available for analysing microarray images, the above mentioned irregularities in these images still cause problems and leave room for improved image processing. For example, with existing software spots may be missed and/or spot size may not be accurately determined. A further problem with many of the available software packages is the need for manual input during the image analysis, making automation difficult. For example it may be necessary to manually align a grid template over the spots in a captured image in order to obtain a satisfactory result. There is therefore a need for more robust image processing procedures which address some or all of these problems.

According a first aspect of the present invention it is therefore provided A method of processing a digital image input comprising data representing a plurality of spots to generate data for defining a grid to subdivide said image to substantially separate at least some of the spots, the method comprising: generating a sequence of thresholded digital images from said digital image input using a progressively reduced threshold for each successive thresholded image of the sequence; processing each of said thresholded images to removed components of said images not corresponding to potential spots; sequentially combining said processed thresholded images to form a combined image such that a spot in an image with a lower threshold is not included in said combined image if a corresponding spot in an image with a higher threshold is detected; and generating said grid data to substantially separate spots in said combined image.

Variations in spots size and shape and image artefacts make the determination of a suitable single threshold for an image difficult but by generating a sequence of thresholded images (albeit not necessarily stored in a sequence) using a progressively reduced threshold helps to overcome this difficulty. The thresholds may be selected to separate a signal for a potential spot from the background although it would be appreciated that a spot may comprise either a light area on a dark background, or vice versa. The spots may be any shape but generally they are circular. The processing of the thresholded images to remove components not corresponding to potential spots may comprise, for example, the removal of noise and/or a convolution operation, but preferably this processing comprises a morphological reconstruction operation. Morphological image processing, which is described further below, employs shape information, for example *a priori* knowledge of the expected shape of a spot, to modify an image. However related image processing techniques, such as cellular processing, may also be employed.

The processing of a thresholded image may further comprise a morphological opening operation following the reconstruction operation, to detect candidate guide spots, and optionally a subsequent area filtering operation to remove patches greater than a predetermined size, for example greater than a maximum permitted spot radius. Prior to the morphological reconstruction a thresholded image may be convolved with a shape corresponding to an expected spot shape and/or size, such as a circular disc with the size of an expected or ideal spot. The result of such a convolution may then be further thresholded (to obtain a marker image) before said reconstruction.

The generating of a sequence of thresholded images may comprise adaptively thresholding the input image or an image derived from the input image, for example by pre-processing. Such adaptive thresholding may be performed using a local window that moves across the input image to determine local or adaptive threshold levels for thresholding the input image.

The grid data may be generated from the combined image in a number of ways, but a preferred method comprises determining a set of expected spot locations using actually detected spots in the combined image and then generating the grid data using these expected locations. Thus, for example, actual spots in the combined image may be assigned to grid positions or locations defined by a grid depended upon expected spot locations and then data for lines defining these grid positions, in effect defining the grid, may be generated using the actually detected spots. Optionally detected spots deviating from an expected spot location by more than allowed distance may be removed prior to generating the grid. An expected spot location along a direction may be determined by projecting actually detected spots onto the direction, summing the projections where they overlap, and then using this summed projection data to determine coordinates of expected spot locations along the directions.

The image data may be preprocessed prior to said grid generation, for example by restricting the dynamic range of the image and/or smoothing the image, for example by averaging. Where two or more images of a subject, such as two fluorescence images of the same microarray at different wavelengths, are to be processed it can be appropriate to generate a single grid common to both images. In such a case the preprocessing preferably includes creating a composite image, for example from red and green fluorescence images of the microarray, prior to generating a grid for the composite image which, it will be appreciated, should also serve for each separate component image of the composite.

In another aspect the invention provides a method of processing a digital image input comprising data representing a plurality of spots to generate data for defining a grid to subdivide said image to substantially separate at least some of the spots, the method comprising: generating a guide spot image by operating on data from said digital image input to perform a morphological reconstruction operation; and generating said grid data using guide spots in said guide spot image.

The preferred features and options described above with reference to the first aspect of the invention may also be employed with this second aspect of this invention. By utilizing a morphological reconstruction operation *a priori* knowledge relating to the nature of the image such as an expected spot size and/or shape can be employed to facilitate spot feature detection and/or noise reduction, preferably without eliminating important features.

The morphological reconstruction operation may comprise an operation which retains substantially only components corresponding possible spot patches. Thus the operation may involve, operating on an input image using a marker image derived from the input image, the marker image comprising markers of selected regions expected to correspond to spots. Thus the reconstruction operation may comprise selecting each (connected) component in the input image which has a marker associated with it. The marker image may be generated from an image by convolving the image with an expected spot shape and afterwards identifying regions of relatively high local density or intensity (i.e. comparison with a background level), for example by thresholding. As mentioned above the reconstruction may be followed by a morphological operation and/or an area filtering operation.

Morphological processing usually applies Boolean operations but a variant, sometimes known as cellular processing, may be also be used. Cellular processing is based upon arithmetic evaluations of pixel values over a designated neighbourhood analogous to the structuring element and subsequent comparisons with a pre-determined threshold or thresholds.

Preferably the method includes performing a plurality of thresholding operations on data from said image input to provide a plurality of thresholded images; generating a plurality of said guide spot images from said plurality of thresholded images; and combining said thresholded images to form a combined image prior to generating said grid data. Preferably the combining then comprises sequentially combining said processed thresholded images to form a combined image such that a spot in an image with a lower threshold is not included in said combined image if a corresponding spot in an image with a higher threshold is detected.

The morphological reconstruction operation may be applied to identify or mark corresponding spot regions in a higher and a lower threshold image to enable unwanted spot regions, for example repeats from the lower thresholded image, to be discarded.

Once a grid has been generated it may be used for further processing of (optionally preprocessed) data from the original input image or images. Thus, for example, the grid may define a plurality of regions each containing substantially no more than a single spot - broadly speaking each with or without a spot. Each of these regions, typically squares or rectangles within the grid, may be processed separately to separate or segment the spot from the background. A boundary may then be defined between the spot and the background, for example by fitting an expected spot shape to the image data within a region. This shape-fitting may be performed iteratively, for example by setting pixels outside a fitted shape to a background value and then re-fitting the shape. Optionally a patch of image potentially corresponding to the shape, for example a patch of image foreground, may be grown prior to this fitting procedure.

In this way a series of spot boundaries, typically circular, may be fitted to those spots identified within the input image. The image or optionally, where the input image is a composite, or the images combined to form the composite, may then be further analysed. For example the fluorescence intensity of the same spot at two or more different wavelengths may be compared by comparing intensity values for pixels within the boundary of the spot in images captured when the spot is fluorescing at the desired wavelengths. Such a comparison of pixel intensities may be performed a conventional manner, for example by summing intensities of pixels within the spot at a first wavelength and a second wavelength and taking a ratio of the two, or a ratio of average (mean, median or mode) pixel intensities for the two (or more) wavelengths.

In a related aspect the invention provides a digital image processing computer system for processing a digital image comprising data representing a plurality of spots to generate data for defining a grid to subdivide said image to substantially separate at least some of the spots, the computer system comprising: a digital image input for said digital image data: program memory for storing processor control code; data memory for storing digital image data for processing; and a processor coupled to said digital image import and to said program and data memory for implementing said processor control code, said code comprising code for controlling said processor to: generate a sequence of thresholded digital images from said digital image input using a progressively reduced threshold for each successive thresholded image of the sequence;process each of said thresholded images to remove components of said images not corresponding to potential spots;sequentially combine said processed thresholded images to form a combined image such that a spot in an image with a low threshold is not included in said combined image if a corresponding spot in an image with a higher threshold is detected; and generate said grid data to substantially separate spots in said combined image

The invention also provides a digital image processing computer system for processing a digital image comprising data representing a plurality of spots to generate data for defining a grid to subdivide said image to substantially separate at least some of the spots, the computer system comprising: a digital image input for said digital image data: program memory for storing processor control code; data memory for storing digital image data for processing; and a processor coupled to said digital image input and to said program and data memory for implementing said processor control code, said code comprising code for controlling said processor to:generate a guide spot image by operating on data from said digital image input to perform a morphological reconstruction operation; and generate said grid data using guide spots in said guide spot image.

In a preferred embodiment the computer system is employed for processing a digital image of a microarray. Such an image, for example, may be one of a pair of fluorescence images or a composite image derived from a pair of fluorescence images. The code then preferably comprises code to analyse the microarray image using the grid, for example as described above to determine relative fluorescence intensities for spots within the image at two or more wavelengths. The invention further contemplates a microarray scanner comprising such a computer system.

In a further aspect the invention provides a method of processing a region of a digital image to classify pixels in the region, the method comprising: assuming an initial pixel value distribution for pixels within the region; fitting the initial distribution to the image region by determining a measure of a closeness of fit of said distribution to actual values of pixels within the region and modifying said distribution to improve said closeness of fit; determining from said fitted distribution a threshold value for classifying said pixels; and classifying said pixels in said region using said threshold value.

The initial pixel value distribution preferably comprises an intensity distribution, in particular a two component distribution for classifying pixels within said region as either foreground or background pixels. It will be appreciated that in this context a foreground pixel may be either brighter or darker than a background pixel. This is appropriate for an image in which pixels are expected to fall within one or two categories, foreground and background; other distributions may be employed for other sets of expected pixel values.

In a preferred embodiment the two component distribution comprises two substantially Gaussian components which are fitted to the intensities of the foreground and background pixels; where some other intensity distribution is expected a different model may be employed. The two component distribution can be fitted to the image data within the region by determining how closely an initial distribution fits an actual distribution and then modifying the (initial) distribution to improve the fit. Preferably determining the fit and modifying the distribution are performed iteratively so that the distribution model approaches the actual pixel value distribution. The distribution determined in this manner may then be used to determine a threshold value for classifying pixels in the region. For example in the case of a two component intensity distribution model the point at which the two distributions (foreground or background pixels) intercept may be used to determine a threshold for classifying pixels as either foreground or background. In the case Gaussian-based distributions the distribution for each component, and hence the composite two component distribution, may be modified by modifying one or more of a weight or scaling factor, a mean, and a standard deviation for the Gaussian distribution of each component.

The invention also provides a method of using such a pixel classifying procedure to determine a boundary for a spot when the region contains a spot. Thus, for example, a boundary for a foreground region associated with the spot may be determined, in one embodiment by fitting an expected spot shape to the foreground region. Optionally the foreground region may be grown in size prior to such a boundary determination. The boundary determination may comprise an iterative procedure in which, following fitting of an expected spot shape to the foreground region, pixels outside the fitted shape may be set to background values to provide a modified foreground region the expected spot shape then being refitted to this modified region and, optionally, the process being repeated for a number of iterations or until a desired degree of convergence has been obtained.

When processing an image of a microarray the method may further comprise generating a grid to subdivide an image into a plurality of such regions, each potentially containing a spot, prior to classifying pixels in selected regions to locate and determine a boundary for each identified spot. The selected regions are those expected to contain a spot as determined, for example, by measuring a ratio of tentative spot pixel intensity to background pixel intensity. Preferably the grid subdividing the image is generated automatically according to one of the above described methods but, in other embodiments, the grid may be generated in other ways, for example manually. Where the grid is generated automatically according to one of the above described methods the above described spot segmentation method based upon intensity modelling may be supplemented by spot detection based upon morphological image processing carried out during the grid generation procedure. In particular the previously mentioned guide spot image may be employed to provide a segmented foreground region which may be treated as a segmented spot where, for example, a classification procedure fails, which can occur in a noisy image.

In a further aspect the invention provides A digital image processing computer system for processing a region of a digital image to classify pixels in the region, the computer system comprising: a digital image input for digital image data; program memory for storing processor control code; data memory for storing digital image data for processing; and a processor, coupled to said digital image input and to said program and data memory for implementing said processor control code, said code comprising code for controlling processor to: assume an initial pixel value distribution for pixels within the region; fit the initial distribution to the image region by determining a measure of a closeness of fit of said distribution to actual values of pixels within the region and modifying said distribution to improve said closeness of fit; determine from said fitted distribution a threshold value for classifying said pixels; and classify said pixels in said region using said threshold

Preferably the computer system is employed for processing a digital image of a microarray, the system classifying pixels in a plurality of regions of the image to locate spots within the regions for further processing, such as a quantative comparison of fluorescence levels or intensities corresponding two fluorescence wavelengths. The invention further contemplates a microarray scanner using such a computer system.

The invention further provides A method of processing data for a digital image, in particular of a microarray, said image comprising blocks of substantially regularly placed spots; the method comprising processing said image data to generate data for a binary image, pixels of said binary image having one of two values generating spot profile projection data using said binary image data, said projection data comprising a representation of a projection of said spots onto at least one axis; and determining block position data from said projection data by searching for a substantially regularly spaced group of spikes in said projection data, said block postion data defining a position of one or more said blocks along said axis.

In a related aspect the invention further provides as A digital image processing computer system processing data for a digital image, in particular of a microarray, said image comprising blocks of substantially regularly placed spots, the system comprising: a digital image input for said digital image data: program memory for storing processor control code; data memory for storing digital image data for processing; and a processor coupled to said digital image input and to said program and data memory for implementing said processor control code, said code comprising code for controlling said processor to: process said image data to generate data for a binary image, pixels of said binary image having one of two values; generate spot profile projection data using said binary image data, said projection data comprising a representation of a projection of said spots onto at least one axis; and determine block position data from said projection data by searching for a substantially regularly spaced group of spikes in said projection data, said block postion data defining a position of one or more said blocks along said axis.

Preferably the projection data comprises a representation of a projection of the spots onto two substantially orthogonal axis to allow the blocks to be located in two dimensions. The method may include a step of rotational distortion correction prior to generating the spot profile projection data, for example where there is a relatively large rotational distortion of the image. Such a rotational correction may be made be determining a measure of the sharpness of spikes in the profile projection data and then rotating the image such that these spikes are sharpened. The profile projection data is preferably determined by determining a measure of sharpness of spikes formed when the spots are projected onto at least one axis, for example by calculating a difference between the effect of operating, preferably using a morphological operation, with two different structuring elements on initial projection data.

The binary image is preferably generated by determining a mean and/or standard deviation for the image data for a partioned portion of the image data and then using the mean and/or standard deviation to threshold the image. Optionally a morphological image processing operation, in particular an opening operation, may then be applied and, preferably, a further morphological processing operation is performed to remove connected regions. The thresholded image may also be projected onto an axis to determine an estimate for spot radius and/or spot separation, preferably first applying a morphological filtering operation to the thresholded image.

The above described features and aspects of the invention may advantageously combined, as described in more detail later, to provide improved spot segmentation performance.

The invention further provides computer program code to implement the above described methods, the program code of the above described computer systems, and computer apparatus programmed to implement the methods. The program code may be provided on any convention carrier such as a hard or floppy disk, ROM or CD-ROM, or on an optical or electrical signal carrier, for cxample via the Internet or another computer communications network. Embodiments of the methods may be implemented in any conventional programming language, for example in a high level language such as C or in lower level assembly language or machine code, or in other code, for example code for setting up or controlling an ASIC (Application Specific Integrated Circuit) or FPGA (Field Programmable Gate Array). Embodiments of the methods may be implemented on a general purpose computer system such as a PC or MAC. As the skilled person will appreciate the code may be distributed across a plurality of coupled components, for example across a network.

As the skilled person will appreciate the above described methods apparatus and computer program code may be employed in a variety of applications including gene discovery, disease diagnosis, drug discovery, for example to identify correlations in therapeutic responses drugs and the genetic profiles of patents, and toxicological research, for example for identifying correlations between toxic responses to toxicants and changes in genetic profiles of subjects exposed to such toxicants. Likewise the methods may be employed low, medium, or high density arrays including, but not limited to, DNA microarrays, RNA microarrays, protein microarrays, tissue arrays and cell arrays. Similarly the probes the image of whose response is to be processed, may comprise cDNA material, oligo nucleotide material, chromosome material and the like. Furthermore, although the image to be processed will usually comprise an optical image, other types of image may also be processed such as a radiological image, or even an image of some other sort such as a mapping of electrical or electronic properties of an array. The skilled person will recognise the above described image processing techniques are particularly useful for determining the relative hybridisation of two cDNA samples, for example for identifying a biomarker for a disease or a therapeutic target.

These and other aspects of the present invention will now be further described, by way of example only, with reference to the accompanying figures in which:

Figure 1a, 1b, 1c and 1d show, respectively, a schematic diagram of an example of a microarray experiment, a flow diagram of a microarray image processing procedure according to an embodiment of the present invention, a (gamma corrected) red/green/blue (RGB) image of a microarray in which the Cy3 image comprises the green component and the Cy5 image comprises the red component (the blue component being set to zero), and a (gamma corrected) composite image obtained by combining the red and green components of the image of figure 1c in an image preprocessing operation;

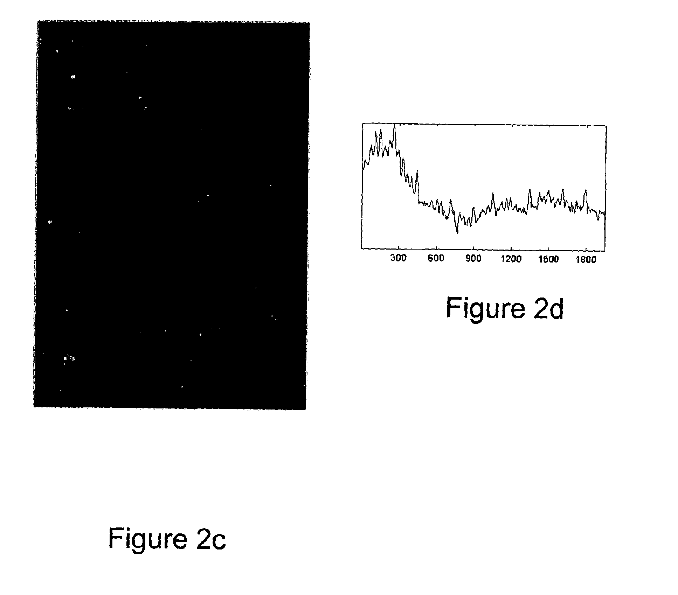

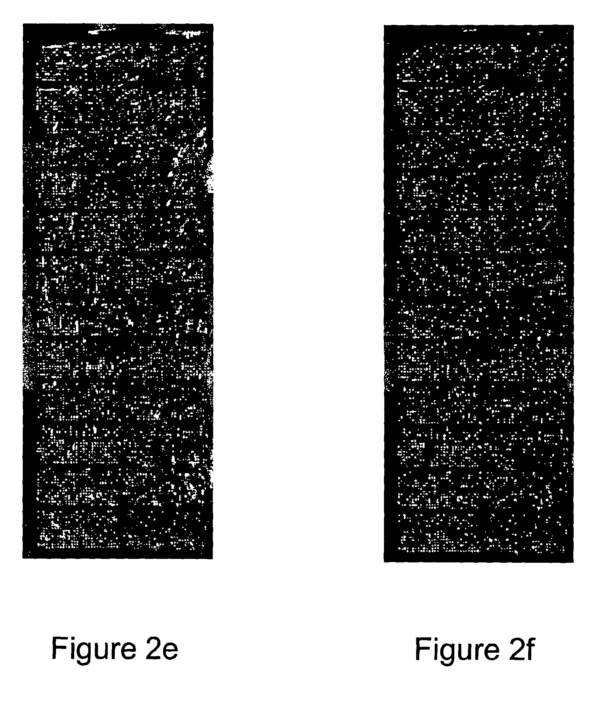

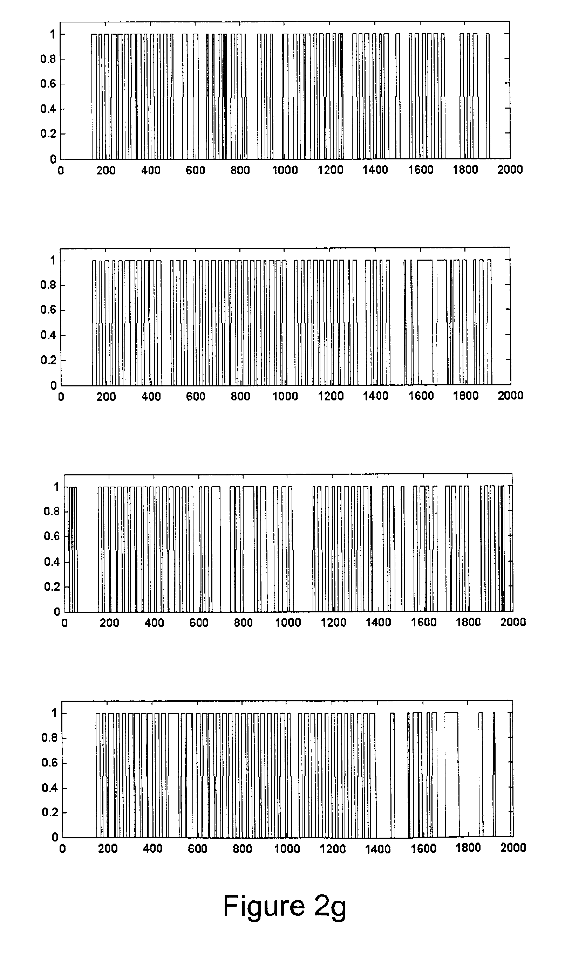

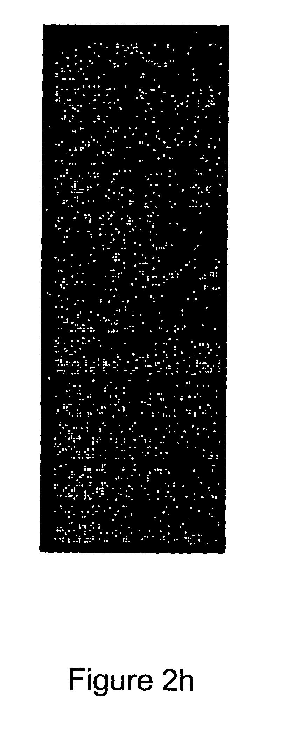

Figure 2a shows a composite microarray image, figure 2b a vertical projection profile of figure 2a; figure 2c (gamma corrected) a second (gamma corrected) composite image, figure 2d a second vertical projection, figure 2e a thresholded image obtained from the composite image of figure 2a, figure 2f shows figure 2c after morphological filtering; figure 2g shows four binarized vertical projection profiles obtained from figure 2f, figure 2h shows a binary image that corresponds to the composite image of figure 2a, figures 2i to 2l show for the un-rotated image of figure 2a, (i) a vertical projection profile, (j) a projection profile after filtering (i) with a first structuring element, (k) a projection profile after filtering (i) with a second, larger structuring element, and (l) a difference signal obtained by subtracting (k) from (j), figure 2m shows a plot of a summed difference signal against rotation angle in pixel displacement, figures 2n and 2o show, for the optimally rotated image of figure 2a; (n) a vertical projection profile, and (o) a difference signal, figures 2p and 2q show a modified vertical spot projection profile and a horizontal spot projection profile that corresponds to the (rotation corrected) image of figure 2a, figure 2r shows a vertical projection block model of a typical block used in correlation processing; figure 2s shows a correlation signal with an envelope and block locations marked with a triangle, figures 2t to 2v show block segmentation results for the microarray image of figure 2a, with (t) a vertical difference signal with block locations marked, (u) a horizontal difference signal with block locations marked, and (v) segmentation imposed onto the composite image, figures 2w to 2y show block segmentation results for the microarray image of figure 2c, with (w) a vertical difference signal with block locations marked, (x) a horizontal difference signal with block locations marked, and (y) segmentation imposed onto the composite image;

Figure 3 shows a flow diagram of an adaptive morphological image processing procedure;

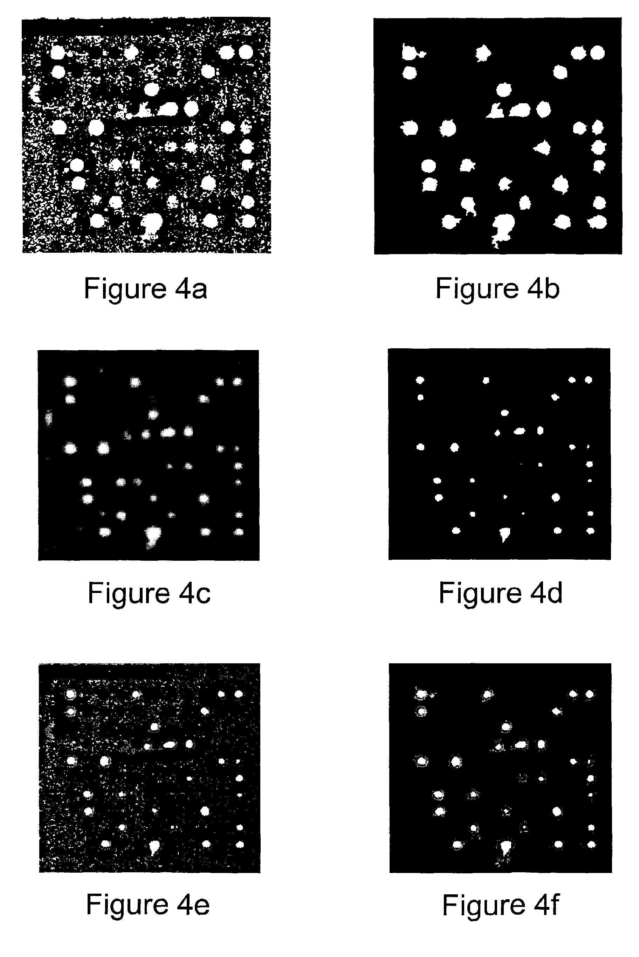

Figures 4a and 4b show respectively an adaptive threshold image thresholded at a 75 percentile value obtained from the microarray image of figure 1d prior to convolution with an expected spot image, and a morphologically reconstructed image obtained by applying a morphological reconstruction operation to an image derived from figure 4a, retaining only the possible spot patches in the adaptive threshold image of figure 4a, figure 4c shows the local white pixel density for the adaptive threshold image of figure 4a, figure 4d shows a marker image obtained by thresholding the image of figure 4c, figure 4e shows a superimposition of the marker image of figure 4d and the adaptive threshold image of figure 4a showing the selected connected regions and figure 4f shows a superimposition of the marker image of figure 4d and the connected regions, retained for further processing.

Figure 5 shows a sequential process of guide spot detection for the microarray image of figure 1d in which morphologically reconstructed images are shown on the left and guide spots detected from these reconstructed images are shown on the right and in which the percentile threshold value decreases from the top to the bottom of the set of images, showing a causal spot detection process in the sequence of images;

Figure 6 shows a flow diagram of a spot separation estimation procedure;

Figure 7 shows a set of guide spots obtained from the microarray image of figure 1d after removal of spots identified as erroneous;

Figure 8 shows a grid generated on the guide spot image of figure 7 overlaid on the composite image of figure 1d;

Figures 9a and 9b show, respectively, a flow diagram of a spot segmentation procedure, and a two-component intensity modeling and a threshold determination procedure;

Figures 10a and 10b show, respectively, an image of a grid region containing a spot, and a foreground area of the grid region of figure 10a thresholdcd using a threshold obtained from a two-component Gaussian-mixture intensity distribution model;

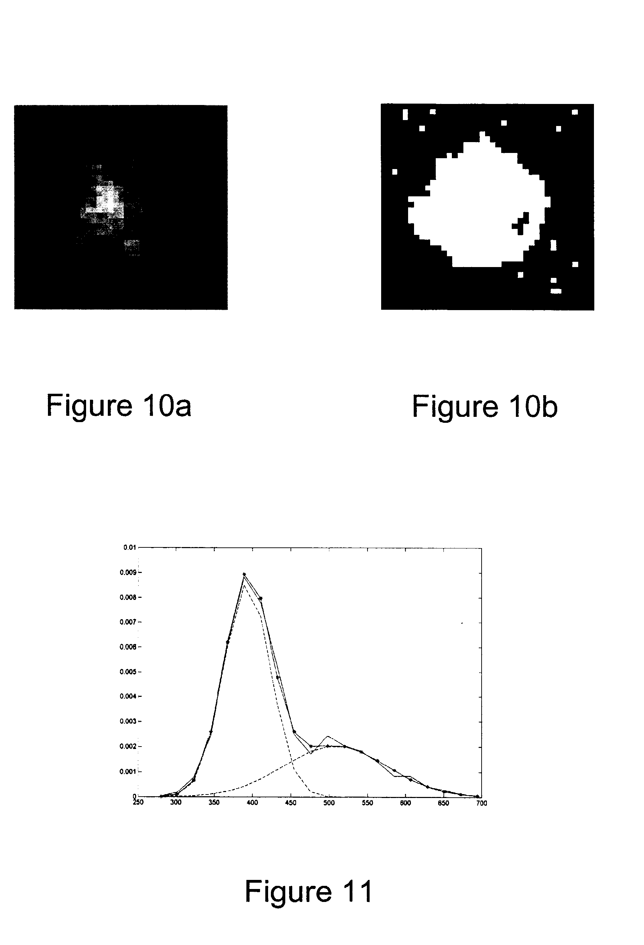

Figure 11 shows the two-component Gaussian-mixture intensity distribution model used for thresholding the image of figure 10a in which the pixel intensity is on the $X$ axis and probability density is on the $Y$ axis and in which the solid line indicates an actual intensity probability density function estimated from an intensity histogram of the grid region, the two dashed lines show the two estimated Gaussian components of the modeled distribution and the solid asterisk line shows a two-component Gaussian-mixture model distribution comprising a combination of the two individual Gaussian components, and in which an optimum threshold is determined by the intersection of the two Gaussian components;

Figures 12a and 12b show steps in a best-fit circle computation procedure for spot segmentation in which figure 12a shows a thresholded region and figure 12b successive iterations of a best-fit circle following exclusion of erroneous protrusions;

Figure 13 shows a general purpose computer system programmed to implement embodiments of methods according to aspects of the invention; and

Figure 14 shows two examples of images of DNA microarrays processed for spot segmentation according to a method embodying an aspect of the present invention.

In the methods described below, use is made of morphological image processing. Details of morphological image processing techniques can be found in J. Serra, *Image Analysis and Mathematical Morphology,* Academic Press, New York, 1982; E.R. Dougherty, *An Introduction to Morphological Image Processing,* SPIE-The International Society for Optical Engineering, 1992, hereby incorporated by referenced. The skilled person will understand the morphological image analysis techniques employed but, for completeness, such techniques will be briefly reviewed.

Broadly speaking morphological processing operates on the topology and structures of objects in an image by probing the image with a structuring element and quantifying the manner in which the structuring element fits, or does not fit within the image. Most (but not all) morphological techniques operate on binary images, for example testing whether the structuring element (SE) fits within a portion of the image or testing whether the SE hits or intersects a portion of the image. An SE is somewhat analogous to a kernel in convolution. Since morphological operations are generally performed on binary images it is straightforward to define the complement (NOT) of an image, the intersection (AND) of an image and the union (OR) of an image. From these operations further operations such as erosion (which shrinks or erodes an image, expands the holes enclosed by a region and enlarges gaps between regions) and its dual, dilation (which expands or dilates an image shrinking holes by a region, reducing gaps between regions and tending to fill in small intrusions into a region or boundary) can be defined. Other morphological operations include morphological opening and closing, morphological opening comprising erosion followed by dilation and morphological closing comprising dilation followed by erosion. Morphological opening tends to smooth boundaries, break narrow links between regions and remove small objects, thus reducing noise and separating connected objects; morphological closing also tends to smooth boundaries, but can connect disconnected objects and can fill small holes caused by noise.

Most morphological operations can be defined in terms of two basic operations, erosion and dilation. In more detail, the erosion of set *A* by set *B* is denoted by *Erode*(*A,B*)=*A*⊖*B* and is defined by

$$A \ominus B = \{x : B + x < A\} \tag{1}$$

where *x* denotes a translation and < denotes the subset relation. In embodiments of morphological image analysis, *A* is the input image and *B* is the structuring element. *A*⊖*B* comprises all points *x* for which the translation of *B* by *x* fits inside of *A*. The dilation operation is dual to the erosion operation, that is, it is defined via erosion by set complementation. The dilation of set *A* by set *B* is denoted by *Dilate*(*A,B*)=*A*⊕*B* and is defined by

$$A \oplus B = [A^c \ominus (-B)]^c \tag{2}$$

where $A^c$ denotes the set-theoretic complement of *A*. To dilate *A* by *B, B* is rotated around the origin to obtain *-B, A^c* is eroded by *-B,* and then the complement of the erosion is taken.

Referring now to figure 1b, this shows a flow diagram outlining a microarray image processing procedure to be described in detail below. At step S100 a computer inputs one, or more normally two images from a microarray scanner, for example corresponding to images of the microarray when fluorescing at two different wavelengths. These two images may comprise, for example, two colour components of a single colour image.

At step S102 the two (or more) input images are combined and, preferably, preprocessed, for example to apply smoothing and dynamic range reduction. Then, at step S104, an automatic grid generation procedure starts with an adaptive morphological spot detection procedure being applied to the preprocessed composite image. The spot detected by this step serve as guide spots for generating the grid. Once these guide spots have been detected a global rotation correction is preferably applied (step S106), although usually a small rotation is needed. Then at step S108 the horizontal and vertical separations of spots (that is positions at which spots may be found) is estimated and any spots which are further from spot positions determined in this step than allowed may be removed. Then, at step S110, a grid is generated and, optionally, at step S110a data for the grid is output from the computer system.

Additionally or alternatively the procedure continues and performs spot segmentation for each spot-containing region of the grid. This procedure may either use the grid data generated by steps S104 - S110 or may use grid data from some other source (S111), for example grid data obtained from a different algorithm or grid data defined manually by a user.

At step S112 the spot segmentation procedure for a grid region performs background equalization on the composite preprocessed image provided by step S102 and, following this the intensity distribution of pixels in the region is modeled, for example with two component models (foreground and background) to determine a threshold.

This threshold can then be used to separate foreground and background areas of the grid region and once it is done, a circle (or other spot shape) is fitted to the foreground pixels, that is those expected to correspond to the spot (step S116) and corresponding spot segmentation data may then be output at step S116a. Additionally or alternatively the computer system may continue the procedure and analyses intensities of spot pixels, preferably in comparison to intensities of background pixels, for example to determine gene expression or other data.

These steps will now be described in more detail.

In one embodiment the input microarray images comprise a pair of 16-bit images in TIFF format, laser scanned from a microarray slide, using two different wavelengths. Figure 1c illustrates a composite RGB colour image of a 12x4 block microarray with 14x15 spots in each block, a total of 10080 spots. We denote the images that correspond to the Cy5 and Cy3 dye as *R* (for Red) and *G* (for Green), respectively. For computational efficiency, the segmentation method preferably operates on a single image. If *X* denotes the composite image (figure 1d) obtained from *R* and *G*, then *X* may be computed as

$$X = \left\lfloor 0.5 * \left( G' + \left( \frac{median(G')}{median(R')} \right) R' \right) \right\rfloor \qquad (3)$$

where $G' = \sqrt{G}$ , $R' = R$, and $\lfloor \, \rfloor$ denotes rounding to the nearest integer in the range [0-255]. The square root transformation restricts the dynamic range of the original 16-bit images to 8 bits and the median weighting factor provides equal contribution from both images. Note that when $X$ is restricted to be of integer values, then it can be represented as an 8-bit image. The composite image $X$ is then smoothed using $3\times3$ averaging.

The algorithm to be described is preferably implemented on a block-by-block basis. The blocks may be segmented in a further image preprocessing procedure using a block segmentation algorithm such as the published method of R. Hirata JR., J Barrera, R.F.

Hashimoto and D.O. Dantas. "Microarray Gridding by Mathematical Morphology", Proceeding of XIV Brazilian Symposium on Computer Graphics and image Processing 2001, October 2001, pp. 112-119. In this method, the horizontal and vertical proj ection profiles are computed from the union of the $R$ and $G$ images. Then a series of morphological filtering (with user-supplied parameters) is used to filter the projection profiles to estimate the block boundaries. A method with improved robustness is described below. With this (optional) additional stage, the whole of microarray image analysis may be implemented completely automatically, in particular without the need for any user-supplied parameter, such as an ideal spot radius or block postion

As previously described the spots on a microarray are printed in a regular pattern: a microarry image will contain $NxM$ blocks, where each block will contain $pxq$ spots. The $NxM$ blocks on each array are printed simultaneously by repeatdly spotting the slide surface with a group of $NxM$ print-tips. Adjacent spots inside each block are separated during prnting by slightly offsetting the print-tips after each spotting.

Each of the blocks in a microarray image is typically surrounded by regions void of any spots, and the blocks are arranged in a very rigid pattern due to the printing process. For good quality microarray images, detecting the significant valleys in the vertical and horizontal printing projection profiles of the composite image, as described in R. Hirata JR., J Barrera, R.F. Hashimoto and D.O. Dantas, "Microarray Gridding by Mathematical Morphology", Proceedings of XIV Brazilian Symposium on Computer Graphics and Image Processing 2001, October 2001, pp. 112 - 119; and R. Hirata JR., J Barrera, R.F. Hashimoto, D.O. Dantas and G.H. Esteves, "Segmentation of Microarray Images by Mathematical Morphology", Real-Time Imaging, vol. 8, issue 6, Dec 2002, pp. 491-505, may produce an accurate segmentation of the blocks. However, when the image quality is not high, such a simple approach is not robust enough since the significant valleys separating the blocks cannot be detected reliably. This situation is depicted in figure 2a and figure 2b. In figure 2a the significant valleys that correspond to the block boundaries can be ovserved in the vertical projection profile. In figure 2b the vertical projection profile of the composite image does not show any significant valleys separating the blocks.

We now describe a novel approach that can reliably segment the blocks in a microarray image, even for images of low quality. Given a composite microarry image, the block segmentation method comprises the following steps: (preferably) initial estimation of of the spot radius and spot separation, generation of the binary image, (preferably) global rotational distortion correction, generation of the spot projection profiles, and estimation of the position of the blocks for both x and y directions using correlation processing.

These steps are described in more detail below.

Figure 2 shows a composite microarray image, and figure 2b a vertical projection profile; valleys that correspond to block boundaries can be clearly observed. Figure 2 shows a second composite image and figure 2a shows a second vertical projection profile. No significant valleys separating the different blocks can be observed.

Step one - Spot radius and spot segmentation estimation. The entire composite image is first partitioned into a number of non-overlapping sub-images. For a typical microarray image, one of the dimensions is usually is usually several times larger than the other dimension, for example of size 5596x1980 pixels. Let the larger dimension be the row dimension, and the smaller dimension be the column dimension. We partition the column dimension into four non-overlapping parts, and then partition the row dimension such that each sub-image is approximately square. The mean $\mu$ and standard deviation $\sigma$ of each sub-image are computed and the sub-image is thresholded by setting pixels with value outside the range of $(\mu \pm \sigma)$ to 1, and those within the range to 0. The thresholding operation produces a binary image where the set pixels would largely correspond to true spots in the image.

To reduce the thresholding errors, the binary image is subjected to morphological filtering, which comprises morphological opening with a circular structuring element of radius 2, morphological closing with a circular structuring element of radius 2, and finally an area filtering operation where any large connected components with a pixel count larger than that of a circular disk with radius equal to 20 pixels are removed. Figure 2e shows the thresholded image that corresponds to the composite image of figure 2a and figure 2f shows the morphologically filtered image. Most of the thresholding errors have been removed. Thus figure 2e shows a thresholded image obtained from the composite image of figure 2a and figure 2f shows figure 2c after morphological filtering.

The binary image is then partitioned into parts, in this case four equal parts along the row dimension, and a projection profile onto the x-axis is computed for each of the partitions. Given an image $A$ of size $M \times N$ (row$\times$column), the projection of $A$ onto the x-axis, $P_{A_x}(j)$, is given by

$$P_{A_x}(j) = \sum_{i=1}^{M} A(i,j) \qquad j = 1,\ldots,N \qquad\qquad (1)$$

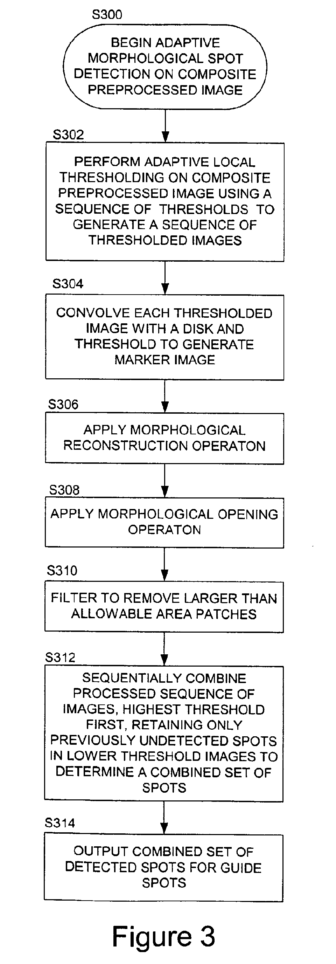

Let the average white pixel density $\rho$ be given by the number of white pixels in the entire binary image divided by the number of pixels in the image. Let the number of pixels in the row dimension of the partition be $r$. We define the minimum threshold for the projection profiles as $\rho \times r$. Then, any value in the projection profiles that is smaller than this threshold is set to zero. The four projection profiles are then binarized by setting values that are greater than zero to 1. After this operation, the spikes in the binarized profiles indicate the present of spots in those $x$ locations. Figure4 shows the four binarized projection profiles which correspond to the binary image of Figure3(b). To estimate the radius of the ideal spot, we determine the extent of each of the spikes in all four binarized profiles, and take the median of these extents to be the estimated diameter of the ideal spot.

To estimate the separation between adjacent spots, we first filter out any spike that has an extent smaller than 0.9 or larger than 1.1 times the estimated diameter of the ideal spot. Then the gaps between the spikes in the binarized profiles are determined, and the spot separation, *spot_sep,* is taken to be the fifteen percentile of the collection of these gaps.

Figure 2g shows four binarized vertical projection profiles obtained from figure 2f, are used to estimate the spot radius and the separation between adjacent spots.

The above approach for estimating the radius and spot separation works reliably as long as there is no large rotational distortion in the image to corrupt the projection profiles. For microarray image, we can safely assume that large rotational distortion does not occur in practice. However, small rotational distortion of the image cannot be avoided totally. Since we partition the entire image into four parts to compute the projection profiles, such that the number of rows in each partition is reduced by 1/4, the small rotational distortion that exists in the image would become insignificant. The partition into four parts also generated more samples of the spot diameter and gap, which minimizes the error in the estimation of the ideal spot diameter and spot separation.

Step 2 - binary image generation. From the thresholded image obtained in the previous step, we prepare the final binary image as follows. First, the thresholded image undergoes morphological opening using a circular structuring element with a radius that is equal to 0.75\**rad,* where *rad* is the estimated spot radius from the previous step. Then, connected regions larger than the area of a circular spot of radius 1.5\**rad* are removed.

Figure 2h shows a binary image that corresponds to the composite image of figure 2a.

Step 3 - correction of global rotational distortion. If the spots were not aligned properly with the *x* and *y* axes, the horizontal and vertical projection of the binary image would produce profiles with spikes (due to summing of white pixels that correspond to spots) that spread out into each other. Such projection profiles would make detection of block boundaries difficult and error-prone. In order to produce sharp spikes in the profiles, we need to correct for any global rotational distortion. As we assume the row dimension is larger than the column dimension, the rotational distortion would be more pronounced in the vertical projection profile (i.e., projection onto the *x*-axis). Our strategy for correcting this distortion is to search for an angle that makes the spikes in the vertical projection profile as sharp as possible.

To determine the distortion angle, we need a way to measure the sharpness of the spikes in the profile. This is done as follows. The vertical projection profile, *proj$_x$,* is first computed. The values at both end of the profile, with an extent of 2\*(*rad+spot_sep*) are set to zero. This is to remove any artifact due to contamination along the edges of the microarray slide. The projection profile is then subjected to two morphological filtering operations using two structuring elements. The first structuring element, *se1,* is a line segment of length equal to *rad,* the second structuring element, *se2,* is a line segment of length equal to *2\*rad.* Let *pr1* be the result of performing a 1-D morphological opening on *proj$_x$* using *se1,* the effect of which is to remove the tip of the spikes where the *se1* cannot fit. Likewise, let *pr2* be the result of performing a 1-D morphological opening on *proj$_x$* using *se2.* Then, we compute the difference, *diff = pr*1- *pr*2. This difference would indicate the portion of the spikes that survive *se1,* but not *se2.* If a spike is sharp, the slopes of the spike would be steep, and many values in the spike that survive *se1* would not survive the larger *se2,* hence the difference would be large. Conversely, if a spike has gentle slopes, many values in the spike that survive *se1* would also survive *se2,* giving rise to small difference for that spike. The process is illustrated in figures 2i to 2l. A measure of sharpness of the spikes in the profile can therefore be obtained by computing the sum of the *diff* signal.

To estimate the distortion angle, we search through a range of angle, and look for the angle that produces the largest sum. Since the rotation angle is practically very small, we assume that the rotation causes a shift of between -14 to 14 pixels, left to right, from the origin, for row that is furthest away from the origin. The pixel-based displacement is converted to angle by taking the arc-sine of the pixel displacement divided by the number of row. The angle computed is then used in a standard rotation matrix to rotate the binary image generated in step 2. The rotated binary image is used to generate the *diff* signal, and the sum of the *diff* signal is recorded for every angle. Figure 2m shows the sum of *diff* vs rotation angle (in pixel displacement). The best estimate of the rotational distortion angle, θ, is given by the angle that corresponds to the maximum sum. When the binary image from step 2 is rotated by θ, the spots in the image are aligned with the *x* and *y* axes optimally, such that the spikes in the vertical projection profile are sharp and well separated from each other. Figure 2n and 2o show the vertical projection profile and the difference signal after the image is corrected for rotational distortion. The vertical projection profile is sharper than the un-rotated one, and the difference signal has larger magnitude as well.

Figures 2i to 2l show the un-rotated image of figure 2a: (i) The vertical projection profile, (j) a projection profile after filtering (i) with structuring element *se1,* (k) a projection profile after filtering (i) with a larger structuring element *se2,* and (1) a difference signal obtained by subtracting (k) from (j).

Figure 2m shows the sum of the difference signal vs rotation angle (in pixel displacement). The maximum (at position 15) corresponds to the best rotational angle where the binary image is best aligned to the coordinate axes. In this example position 8 corresponds to the un-rotated image.

Figures 2n and 2o show, for the optimally rotated image of figure 2a: (n) The vertical projection profile and (o) The difference signal. Note that the vertical projection profile is sharper than that of figure 2i, and the difference signal here has larger magnitude compared to that in figure 21.

Step 4 - computation of spot projection profiles. To compute the *x* and *y* axis spot projection profiles, we first compute the *diff* signal for both the horizontal and vertical projections as in step 3. The *diff* signal is then clipped at the value ν at which the difference between adjacent percentile values, which lies between the 10 to 20 percentile range, is the maximum. Any value in the *diff* signal that is smaller than 0.1*ν are also set to zero, since they are likely due to noise rather than genuine spots in the image. Figure 2p and 2q show the modified vertical and horizontal spot projection profile, respectively. These two profiles would be used for the block position estimation in the next step.

Figures 2p and 2q show the modified (p) vertical spot projection profile and (q) horizontal spot projection profile that correspond to the (rotation corrected) image of figure 2a.

Step 5 - block position estimation by correlation processing. Once the modified vertical and horizontal spot projection profiles are generated, we can estimate the position of the blocks in the two profiles. These positions would specify the extent of the blocks in the *x* and *y* axis, thus providing a segmentation of the original microarray image into blocks of spots. Since the procedure for block position estimation is the same for each profile, we would consider only the vertical projection profile below.

Given a vertical projection profile from step 4, we generate a new profile, *pmx*, where only the spikes with maximum value equal to ν (computed in step 4) are retained. To estimate the extent of the spot block on the *x* axis, we search for groups of spikes in *pmx* that are spaced regularly. The largest group of spikes is assumed to correspond to the true block. To do this, the centroid of each spike in *pmx* is first determined in order to generate a centroid profile. For simplicity, the centroid of a spike is taken to be at the center of its support. We then estimate the spacing, γ, between the projection of two adjacent column of spots in a block. The spacing γ is taken to be the median of the collection of adjacent spike separations between all spikes in *pmx* (note that the separations are actually determined from the centroid profile). The adjacent spike separations that are larger than 1.25*γ are discarded, and then a threshold *t* is computed from the remaining adjacent spike separations as $t = \mu + 3\sigma$, where μ and σ are the mean and standard deviation of the set of remaining adjacent spike separations, respectively. After the threshold *t* is computed, isolated spikes in *pmx*, which are at a distance of more than *t* away from both the left and right adjacent spikes, are discarded. Then, groups of spikes in *pmx* are determined, where the spikes in each group have adjacent separations of less than *t*. The group with the most number of spikes is assumed to correspond to actual block in the image, its position on the *x* axis and its extent (i.e., which corresponds to block size) are recorded. Note that there may be more than one group with the maximum number of spikes, and in such case, each of these groups corresponds to one block in the image.

To find the remaining blocks in the vertical projection profile, we use correlation processing. The idea is if we slide a window of spike sequence representing a typical block across the projection profile and compute the correlation between them, then the locations that correspond to actual blocks would produce local maxima in the correlation signal. To perform the correlation, we build a model of the sequence of spikes in a typical block. The model is obtained by averaging the groups of spikes which correspond to actual block found previously. To reduce the bias in the model, the model is averaged with its mirror copy as well. Once the model is constructed, the cross correlation between the model and the vertical projection profile is performed. Figure 2r shows a vertical projection block model for the microarray image of figure 2a.

Figure2r shows a vertical projection block model of a typical block used in correlation processing.

Figure 2s shows the correlation signal with the envelope shown and the correct block locations marked with a triangle.

After the correlation signal is obtained, the envelope of the correlation signal is computed. Local maxima on the envelope are detected and they form the potential candidates for the block locations. The block positions and block size determined earlier are first used to filter out impossible candidates. Specifically, any candidate within a distance $d$ from the previously found block position, where $d$ is given by the estimated block size plus a tolerance equal to the estimated spot separation from step 1, cannot be a valid candidate. Once a candidate is verified to correspond to actual block, it can in turn be used to verify the remaining potential candidates. The verification process is terminated when all potential candidates are either accepted or rejected.

Occasionally, the spot projection profile might be of very poor quality in certain section, such that the correlation signal does not show any prominent local maximum at the correct block location. In such situation, the corresponding block would be missed. Fortunately, we know that the blocks in a microarray image follow a very rigid geometric configuration. Such prior knowledge allows us to fill in missing blocks when we find that the gap between adjacent blocks is exceptionally large and exceeds the estimated block size. The assumption that the space on a microarray slide would be efficiently utilized also allows us to insert missing blocks before and/or after all the detected blocks when the dimension of the empty space exceeds the estimated block size. Once all the block locations are estimated for both the horizontal and vertical spot projection profiles, the microarray image can be segmented into blocks of spots accordingly. Figure 2s shows the correlation signal. Also shown are the envelope where the local maxima are to be located and the correct block locations marked by triangles.

It can be seen that the correct block locations are located at local maxima of the envelope. The block segmentation results for the microarray images of figure 2a and figure 2c are shown in figure 2t to 2y. Correct segmentation has been obtained in both cases.

Figures 2t to 2v show block segmentation result for the microarray image of figure 2a to a vertical difference signal with the block locations marked, (u) a horizontal difference signal with the block locations marked, and (v) the segmentation imposed onto the composite image.

Figures 2w to 2y show block segmentation results for the microarray image of figure 2c: (w) a vertical difference signal with the block locations marked, (x) a horizontal difference signal with the block locations marked, and (y) the segmentation imposed onto the composite image.

The described an automated approach for microarray block segmentation is robust and can handle images where significant valleys which correspond to block boundaries are not present in the projection profiles. After block segmentation, the segmented blocks can be fed into the automated spot segmentation algorithm that we developed earlier. Integrating the block segmentation procedure with the spot segmentation procedure described below, fully automated microarray image analysis can be realized.

Next, an automatic grid generation procedure will be described.

To generate the correct grid for the microarray image, we employ location of high quality guide spots, which can be detected reliably. The term "guide spots" refers to detected spots that are to be used to guide the generation of the grid later. A good quality spot is almost circular in shape, of the appropriate size, and with pixel intensity consistently higher than the background. Moreover, its position should be in agreement with the spot configuration as dictated by the printing process. Such high quality guide spots, once identified, can then be used as anchors to generate the grid structure. To detect the guide spots, an adaptive thresholding and morphological spot detection method is employed. The proposed morphological spot detection method utilizes the shape and size information, in addition to the intensity information, to reliably locate the guide spots. The detected guide spots are then subjected to verification of their layout in the image and any "erroneous" spots are removed. Finally, the grid is generated based on the geometry obtained from the set of guide spots. The procedure is outlined in Figure 3.

Figure 3 shows a flow diagram of an adaptive morphological spot detection procedure, preferably applied to the composite preprocessed image. The procedure, which is described in more detail below, begins at step S300 and at step S302 performs adaptive local thresholding on the composite preprocessed image using a sequence of thresholds to generate a sequence of thresholded images. Then, at step S304, each of these thresholded images is convolved with a disc corresponding to the expected size of a spot to generate a marker image, that is an image comprises markers for selecting corresponding regions of a thresholded image to be retained. A morphological reconstruction operation is then applied at step S306 to retain connected regions of the thresholded image identified as corresponding potential spots and preferably thereafter, at steps S308 and S310, a morphological opening operation is applied followed by a filtering operation to remove larger than allowable area patches, for example "spots" of larger than a predetermined area. Following this, at step S312, the processed sequence of thresholded images is sequentially combined, working from a higher to a lower threshold, and at each combining step only adding in new (guide) spots, that is spots which have not previously been detected in an image thresholded at a higher level. Then, at step S314 the procedure outputs the combined set of detected spots for use as guide spots in a subsequent grid generation step.

We first describe an adaptive morphological spot detection procedure.

A local window is used to perform adaptive thresholding on the composite image. The window moves along and across the image with 50% overlap. At each window location, the image enclosed by the window is thresholded using a specific percentile value computed from the pixels within the window. Due to variations in spot size and shape, and image artifacts, the determination of a single suitable threshold is difficult. To overcome this difficulty, a range of percentile values are used as thresholds. The set of percentile values yields a sequence of adaptive threshold images $\{f_k\}$, that is

$$f_k = adapt\_threshold(X, thresh_k) \qquad (4)$$

where $X$ is the composite image, $thresh_1$ = 90 percentile, $thresh_k$ = (90-5*(k-1)) percentile, and $k$=1 to 5.

Let the local white pixel density be defined as the number of white pixels over the total number of pixels in a local window and let the local window be given by a circular disk with size that of a ideal spot. If a patch in $f_k$ is to contain a spot, its local density at the center of the patch is required to be higher than $t$ = 0.75. To isolate patches that are possibly spots, the threshold images $f_k$ are convolved with a circular disk and threshold using $t$ = 0.75 to obtain a marker image, as shown in figure 4a.

The marker image is used in a morphological reconstruction operation, as described below, where only connected components corresponding to possible spot patches, that is marked by the marker image, are retained in the reconstructed image. Small holes in the reconstructed image are then removed by a *CloseHole* morphological operation. Figure 4b shows an example of the final reconstructed image $f_k$ obtained from a threshold image $f_k$ thresholded at the 75$^{th}$ percentile.

One embodiment of a morphological binary reconstruction operation is defined as follows:

Let $A$ and $J$ be two binary images defined on the same discrete domain and such that $J \subseteq A$ , $J$ belongs to A. $J$ is called the marker image and $A$ is called the mask. Let $A_1, A_2, \cdots, A_n$ be the connected components of $A$. The binary reconstruction of mask $A$ from marker $J$ is defined as,

$$Rec(A,J) = \bigcup_{J \cap A_k \neq 0} A_k$$

Where $\cup$ and $\cap$ denote union and intersection operations respectively.

One embodiment of a morphological close hole operations, CloseHole( A, siz) is defined as follows:

Let $f = Frame(X)$ be an operation that creates a frame image $f$. $f$ is same size as $X$, with pixels around image border set as 1 and elsewhere zero. Let $\bar{X} = Neg(X)$ be the logical negation of $X$. Then the morphological closing of holes in $A$ is given by $Neg(Rec(Neg(A), Frame(A)))$ The morphological closing of holes in $A$ with size smaller than $siz$ is achieved by only retaining filled holes smaller than $siz$.

In the above described embodiment the local window is used for calculating the local white pixels density and the term "patch" just refers to a region in the image with size about that of the ideal spot. If this patch contains a spot, then the local white pixel density will be high at the patch center. Use of such a "patch" is actually not essential. The concept is that if a connected region of white pixels is to belong to possible spot region, then there is required to exist at a location in this connected region where the local density is above the threshold of 0.75, that is, 75% of the pixels within a local window given by a circular disk with size that of an ideal spot should be white pixels. (The 75% is chosen to allow for some pixels within a spot to be zeros due to low intensity value caused by noise). Figures 4c to 4f illustrate the steps involved in identifying these connected regions by implementing this concept.

The many connected regions in the initial thresholded image are due to noise and artifacts, and do not correspond to spots and they are therefore identified and removed. Figure 4c shows the local white pixel density, obtained by convolving the first image with a circular mask the size of an ideal spot. This effectively calculates the density, defined as the number of white pixels over the total number of pixels in the circular local window. The pixels with high local density, shown in figure 4e, are obtained by thresholding the image in figure 4d at 0.75. These pixels are used as markers to select the corresponding connected regions to be preserved. Figure 4f shows the chosen connected regions (the markers are superposed for illustration purposes and is actually a binary images). Only those connected regions with a marker are retained while the rest are eliminated.

$J$ is the marker image (corresponding to figure 4e above). The mask $A$ corresponds to figure 4c. A connected component (of $A$) refers to a group of white pixels where every white pixel is linked to at least one other white pixel in the group. The equation describing the reconstruction operation can be interpreted as meaning that the reconstruction of $A$ from marker $J$ is formed by selecting each of those connected components, $A_k$, in the original binary image (that is figure 4c) which has a marker associated with it.

Morphological opening by a circular disk, with radius given by that of an ideal spot, is applied to the sequence of reconstructed images $\{f_k\}$ to detect candidate guide spots. The morphological opening of an image $A$ by a structuring element $B$ is here denoted by $Open(A,B)=A \circ B$ and is here defined as an erosion, followed by a dilation, of $A$ by $B$, that is,

$$A \circ B = (A\Theta B)\oplus B \qquad\qquad (5)$$

The opening operation may be interpreted as the union of all translations of the structuring element that fit inside the input image. Blobs in $\{f_k\}$, which can be fitted by the circular disk $B$, will be detected by *Open*. The circular structuring element B is preferably the size (and shape) of an ideal spot. Opening will not only remove objects smaller than B, but it will also remove narrow projections or spikes in the object (i.e, smooth the shape of the object), or break apart objects connected by narrow isthmuses.

The minimum size of the blobs detected by *Open* is at least the size of the disk $B$. However, the maximum size of the blobs is not constrained. To exclude large blobs (unlikely spot candidates arising, for example, a comet-tail artifact), the result of the opening operation is preferably subjected to an area filtering operation, which removes blobs larger than a specific area, for example as determined from the maximum allowable spot radius. In one embodiment the area filtering is done by removing connected components with pixel count larger than a specific value.

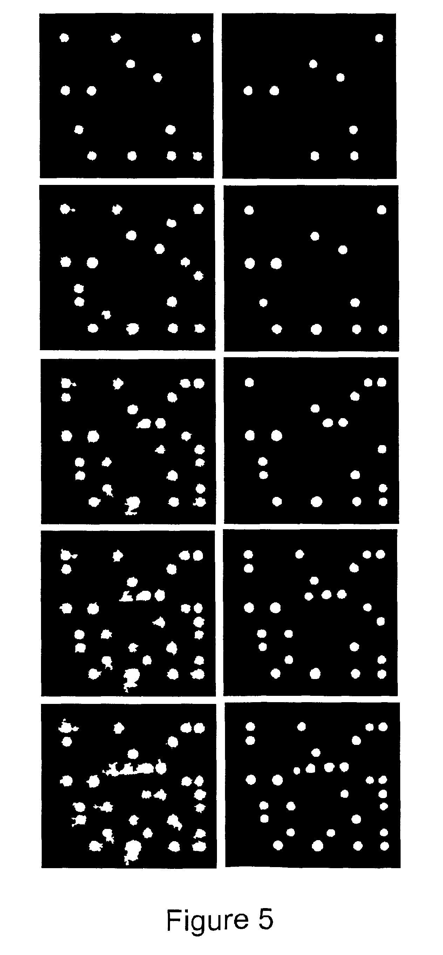

The spot detection process for the sequence of images $\{f_k\}$ obeys a causality principle, i.e., once a spot $S_k$ is found in a higher threshold image $f_k$, then any subsequent detection of spot $S_l$ at a lower threshold image $f_l$, for $l > k$, which includes $S_k$, i.e., satisfying $S_l \supset S_k$, will be ignored. Thus, spot detection at lower threshold image only detects new spots that are not already detected at higher threshold images, i.e., only those spots having zero intersection with all the previously detected spots are retained. This causality principle provides an adaptive detection of guide spots of both strong and weak contrast in the composite image. The new guide spots found in the lower threshold image are preferably subject to area filtering before unioning with the guide spots already found in higher threshold images. Figure 5 illustrates the progressive detection of guide spots from the set of threshold images.

The spot detection process is the same for each thresholded image. Therefore the spot regions (the term "spot region" is used to emphasize that we are referring to a region possibly containing spot, since the actual spot has not been found yet) that were already detected in the higher threshold image would also be detected in the lower threshold image, since any pixels that survived the higher threshold would also survive the lower threshold. Such spot regions are ignored by the algorithm. In fact, the surviving region is larger when a lower threshold is used, since more pixels are likely to pass the lower threshold (in the limit when the threshold is zero, all pixels will survive the threshold). But if a larger region is white, the actual spot position in the region is more uncertain, when compared to a smaller white region.

To understand this procedure, it is helpful to consider a surface of intensity values, where positions that correspond to true spots generally have higher intensities than the surroundings. However, the intensity varies throughout the entire image such that a single threshold does not work for all spots. Then imagine taking a flat disk the size of the ideal spot, and trying to push this disk upward as much as possible from below the surface. When the disk is at a height larger than the minimum threshold (as specified by the lowest threshold image), a spot patch is assumed found and the spot region is obtained by taking the largest connected component thresholded by a value equal to the height of the disk at that location. The analogy is not exact, as the height of the disk is only allowed to be one of several discrete values (given by the series of thresholds used) and since, during the adaptive thresholding the method actually allow some (for example, isolated) low intensity pixels to be counted as spot pixels (description accompanying figures 4c - 4f above).

The spot regions that are already found in the higher threshold image can be identified by performing a logical AND operation between the two adjacent threshold images. Then morphological reconstruction, using the resulting image from the AND operation as a marker, can be used to obtain the image containing the unwanted spot regions (which are already found in the higher threshold image and should be ignored in the lower threshold image) in the lower threshold image. This image can then be subtracted from the lower threshold image to obtain an image with the unwanted spot regions removed.

An optional global rotation correction procedure is described next. The rotation angle of the microarray image may be estimated by examining the alignment of the detected guide spots. Given an image containing guide spots, a centroid image, which contains the centroids of the detected spots, is computed. If the detected spots are aligned properly, then the projection of the centroid image onto the vertical and horizontal axes will bc maximally compact. Given an image $A$ of size $M{\times}N$, the projections of $A$ onto the horizontal axis, $Proj_x (A)$, and the vertical axis, $Proj_y (A)$, are given by

$$Proj_x(A) = P_{A_x}(j) = \sum_{i=1}^{M} A(i,j)$$

$$Proj_y(A) = P_{A_y}(i) = \sum_{j=1}^{N} A(i,j)$$

$$(6)$$

Let $sign(x) = \{-1, 0, 1\}$ for $x = \{x<0, x=0, x>0\}$. We define a quantity that measures the compactness of the projections, *Compact(A)* as

$$Compact(A) = \sum_{j=1}^{N} sign(P_{A_x}(j)) + \sum_{i=1}^{M} sign(P_{A_y}(i)) \qquad (7)$$

The rotation angle that minimizes *Compact(A)* is the estimated global rotation angle of the microarray image. The rotated centroid image can be obtained by multiplying the original centroid image with a standard rotation matrix. The *Compact(A)* that corresponds to the rotation angle can then be computed using the rotated centroid image. In practice, the rotation distortion of the microarray image is usually small, hence, it is normally only necessary to examine a small range of angle centered around the zero value. Once the rotation angle is determined, the microarray image and the detected guide spots can be corrected for rotational distortion.

The rotation matrix is given by

$$\begin{bmatrix} \cos\theta & \sin\theta \\ -\sin\theta & \cos\theta \end{bmatrix},$$

for rotation by a clockwise angle $\theta$.

After the rotation angle is estimated, it is applied to both the guide spot image and the original and composite microarray images, such that they all stay registered to each other for later processing.

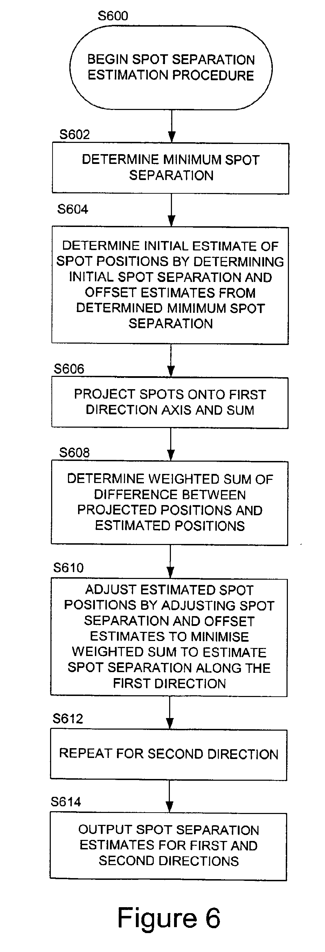

Figure 6 shows a flow diagram for a spot separation estimation procedure, beginning at step S600. At step S602 an estimation of a minimum spot separation is obtained and then at step S604 an initial spot position estimation is determined using the minimum spot separation estimate, the position estimate comprising an estimate of an offsct (from an origin) and a spot separation estimate. Then, at step S606, the spots are projected onto a first direction axis, for example horizontal, and summed to determine a weighted sum of a difference between the projected positions and the estimated positions (step S608), which can then be used to adjust the estimated spot positions to minimize the weighted sum and hence estimate the spot separation along the first direction (step S601). At step S612 the procedure is then repeated for a second direction, for example vertical, and at step S614 the spot separation estimates for the first and second directions are output, here for further processing.

We now describe the spot separation estimation and spot verification procedures. The vertical (horizontal) spot separation is defined to be the distance between the centroids of two adjacent spots located on the same grid column (same grid row). To find the vertical and horizontal spot separation, an estimate of the minimum allowable spot separation is used. The minimum allowable spot separation occurs when two spots are just touching each other. The minimum spot separation, $sep_{min}$ can therefore be obtained from the median area $area_{med}$ of the detected candidate spots by $\sqrt{2*area_{med}/\pi}+\delta$, where $\delta$ is a small tolerance of one or two pixels. In practice, the actual spot separation in the microarray image is larger than this value since spots are printed on the slide with space between them, even for high density printing.

We now describe a procedure for estimating the horizontal spot separation. The vertical spot separation is estimated likewise. Given a centroid image $C$, the projection onto the horizontal axis, $p_x = Proj_x\ (C)$, is computed. The position and magnitude of the non-zero elements in $p_x$ give the position of the spot centroids and the number of spot centroids at that position, respectively.

Let $q_x$ be the vector of ideal spot location in the horizontal direction, i.e., $q_x = \{t_x, t_x + \Delta_x, t_x + 2\Delta_x, ..., t_x + k\Delta_x\}$, where $t_x$ is the horizontal translation, i.e., the starting position relative to the origin, and $\Delta_x$ is the spot separation in the horizontal direction. The method is to adjust the parameters $t_x$ and $\Delta_x$ such that the elements in $q_x$ lines up optimally with the non-zero elements in $p_x$. The optimum $t_x$ and $\Delta_x$ is obtained by minimizing

$$\min_{\{t_x, \Delta_x\}} \sum_k mag_{p_x}(k) * D(pos_{p_x}(k), q_x)$$

(8)

where $D(pos_{p_x}(k), q_x) = \min(|pos_{p_x}(k) - q_x|)$, and $mag_{p_x}(k)$ and $pos_{p_x}(k)$ are the magnitude and position of the $k$-th non-zero element in $p_x$, respectively. Note that the weight $mag_{p_x}(k)$ reflects the fact that elements with higher magnitude should be matched with less positional error, i.e., smaller $D(pos_{p_x}(k), q_x)$ since more spots are detected at that position. Equation (8) is minimized by searching through a range of values centered around the initial estimates, $\Delta_i$ and $t_i$.

The initial estimate $\Delta_i$ can be obtained as follows. Let the between-element-separation be defined as $\delta_k = p_{k+1} - p_k$, where $p_x$ and $p_{k+1}$ are the position of the $k$ and $k+1$ non-zero elements in $p_x$, respectively. Let the set $S_+ = \{\delta_k : \delta_k > sep_{min}\}$ be the set of $\delta_k$ computed from $p_x$, which are larger than the minimum spot separation $sep_{min}$. Let $g$ be the vector, same size as $p_x$, with non-zero elements estimated from groups of adjacent elements in $p_x$ where the elements within a group have $\delta_k < sep_{min}$ and span an interval smaller than the minimum of the set of $S_+$. The position of the non-zero elements in $g$ is computed by the weighted average of the position of the elements in the corresponding group, and the magnitude of the non-zero elements in $g$ is given by the sum of the corresponding group elements. After g is obtained, a vector, $dg$, which gives the separation between adjacent non-zero elements in g is calculated. The $\Delta_i = sep_x^*$ can be obtained as the integer-valued greatest common divisor of $dg$, by solving for the optimum separation $sep_x^*$,

$$sep_x^* = \min_{sep_x} \sum_k \left| \frac{dg(k)}{sep_x} - round\left( \frac{dg(k)}{sep_x} \right) \right|$$

(9)

The initial $t_i$ is such that $t_i + k\Delta_i$ is equal to the position, $u,$ of the largest element in $p_x$, with $k$ given by the largest integer constrained by $k\Delta_i \leq u.$

The above procedure for estimating the horizontal and vertical spot separations is robust to the presence of false guide spots, since their number (hence their weighted contribution in the computation of (8)) are usually much less than the true guide spots detected in a typical microarray image. In addition, the values $\Delta_x$ and $\Delta_y$ represent an averaging of spot separation between many guide spots and are therefore robust to error in spot location.

If the microarray image contains geometric distortion such that spot separation varies slowly with location, then the estimation of optimum spot separations can be done adaptively using a window that move along and across the image. The estimated values can then be interpolated and used to correct the geometric distortion in the original image.

Once the vertical and horizontal spot separations are determined, any false guide spots, i.e., any spurious spots that do not conform to the grid structure, can be identified and removed. A spot is declared as spurious when it deviates from the optimum spot location (specified by $q_x$ or $q_y$) by more than one $r_{median}$, where $r_{median}$ is the radius of the detected guide spots with median area.

We next describe the grid generation procedure. The detected guide spots can be assigned to the appropriate grid row or grid column based on their proximity to the optimum locations as specified by $q_x$ and $q_y$. Grid lines are then fitted onto the image to separate out each individual spots, using the least square criterion. When no spots are detected for a particular grid row or grid column, the parameters for the grid line are interpolated from those of the neighbouring lines. After the grid is created, spot segmentation can be carried out in each of the subregion specified by the grid.

To illustrate the procedure the steps involved in finding the vertical grid lines, i.e., separating the columns, are described as an example. The horizontal grid lines separating the row are obtained likewise. In finding the grid lines, the guide spots are represented by their centroids, and the computation is done using the centroid image in place of the actual guide spot image. Thus in what follows references to a guide spot are actually referring to the corresponding centroid of the guide spot. The list of optimum x-axis locations $q_x$ is obtained, and the first value in $q_x$ is assigned to the x-axis value of the first column, the second value the x-axis value of the second column, and so forth, and the following steps are performed:

1. Assign to each guide spot a column number

-    this is done by searching the entry in $q_x$ which is closest in value to the guide spot's x-axis value. The position of this entry will be the column number assigned to that guide spot.

2. For each column which contains some guide spots (i.e., not empty), fit a straight line onto the x and y coordinate values of the guide spots. Since a straight line $x=my+c$ is parameterised by two values, the gradient m and the constant c, the straight line fitting is equivalent to solving for $(m,c)$ that corresponds to that column. The straight line can be found by solving a least square problem (assuming $N$ guide spots in the column, $N>=2$) $Au=b$, where

$$A = \begin{bmatrix} y_1 & 1 \\ \vdots & \vdots \\ y_N & 1 \end{bmatrix}, \quad u = \begin{bmatrix} m \\ c \end{bmatrix}, \quad b = \begin{bmatrix} x_1 \\ \vdots \\ x_N \end{bmatrix} \qquad (1)$$

The solution is given by $u = (A^T A)^{-1} A^T b$. Note that at least two guide spots are needed to solve the above equation. If only one guide spot is present in the column, another $(x,y)$ point is needed to solve eqn.(1). Even if two or more guide spots are present in the column, they may be very close together such that the slope $m$ estimated from them may contain large error. To remedy such situation, we employ the following strategy:

(a) Calculate the range between the first row and the last row (obtained from $q_y$ ), denote this as *yrange.*
(b) If the spot with the smallest *y*-coord value in the column is more than 0.25\**yrange* away from the first row, append a point to the list of spots in the column, with the coord of the point $(x,y)$ obtained by: x is given by the average of the *x*-values of the spots plus the ideal *x*-location of the column, *y* given by the ideal y-location of the first row.
(c) Do likewise if the spot with the largest *y*-coord value in the column is more than 0.25\**yrange* away from the last row, ie, we append to the list of spots a point with coord $(x,y)$, where x is given by the average of the *x*-values of the spots plus the ideal *x*-location of the column, *y* given by the ideal *y*-location of the last row.

3. After all columns with spots are processed to find the straight lines, for column without any spot, say at *x*-axis value $col_k$ the corresponding straight line parameters $(m_k,c_k)$ is interpolated from the neighbouring columns' parameters immediately to the left and to the right. The interpolation is weighted in the sense that if $col_k$ is closer to the column on the left than the column on the right, then more weight is placed on the parameters of the column to the left. The exact procedure is:

(a) Search to the left of $col_k$ for non-empty column, denote the *x*-axis value of this column as *L*. Search to the right of $col_k$ for non-empty column, denote the *x*-axis value of this column as *R*.
(b) Compute the weights:

$$w_1 = (R - col_k)/(R - L)$$

$$w_2 = (col_k - L)/(R - L)$$

(c) Let the parameters associated with the column L be $(m_L,c_L)$, and with the R column be $(m_R,c_R)$. Then the parameters for $col_k$, $(m_k,c_k)$, are interpolated as:

$$m_k = m_L \times w_1 + m_R \times w_2$$

$$c_k = c_L \times w_1 + c_R \times w_2$$

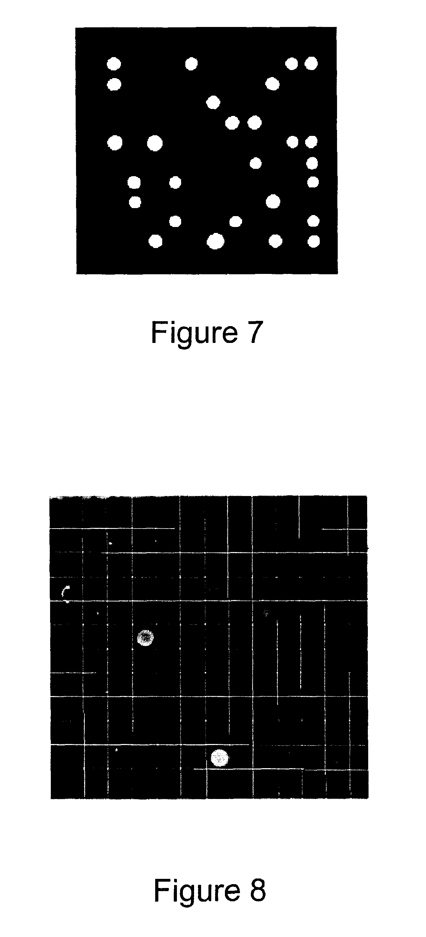

4. The above steps 1-3 produce straight lines that pass through the centroids of the guide spots. To obtain the grid lines separating each column of spots as shown in figure 8, each grid line's *(m,c)* parameters are obtained by averaging the parameters of the straight lines, one to the left and one to the right of the grid line.

Figure 8 shows a grid generated by these methods from the composite image of figure 2b. This grid may be used in the following spot segmentation procedure or with another spot segmentation procedure.

A spot segmentation procedure, which may be used following the above described grid generation procedure, or following some other grid generation procedure is now described. Spot segmentation is performed in each of the subregion defined by the grid. The segmentation involves finding a circle that separates out the spot, if any, from the image background. The spot segmentation task can be divided into three major steps: (1) background equalization for intensity variation in the subregion, (2) optimum thresholding of the subregion, and finally, (3) finding the circle that segment out the spot.

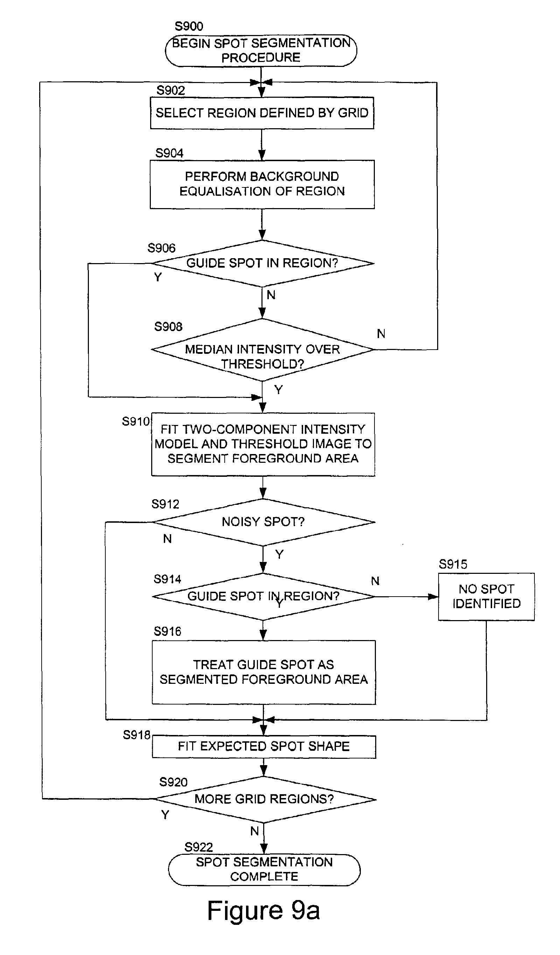

A flow diagram outlining a spot segmentation procedure is shown in figure 9a. The procedure begins at step S900 and step S902 selects a region (later also referred to as a subregion) defined by the grid and, at step S904, the background of this region is equalized. A determination of whether or not the region contains a spot is made by first testing whether there is a guide spot in the region (step S906) and, if not, by testing whether the average (median) intensity in the region is greater than a threshold value (step S908). If no spot is found the procedure loops back to step S902 to select a further region of the grid for processing. If a spot is tentatively determined to be present the procedure continues with step S910.

At step S910 the pixel intensities in the region are fitted to a two-component intensity model to determine a threshold value for segmenting the region into foreground and background areas (step S910). If the foreground and background distributions overlap excessively the spot may be noisy and this is tested at step S912. If the spot is noisy the procedure checks at step S914, whether there is a guide spot in the region, and if there is this can be treated as the segmented foreground area (step S916). Otherwise it may not be possible to reliably segment the foreground from the background, in which case if the spot is noisy and there is no guide spot no spot is identified (step S915). If a spot is found at step S918 the expected spot shape (generally a circle) is fitted to the segmented foreground area and the procedure then checks whether there are anymore grid regions to process (step S920), if so looping back to step S902, if not the spot segmentation procedure completing at step S922.

A background equalization procedure will now be described. The purpose of background equalization is to remove any obvious intensity variation or 'tilt' in background intensity. Since the image subregion has its centre portion occupied by a spot of unknown intensity and size, we can only reliably estimate the background intensity variation by sampling the intensity at the four corner regions of the subregion.

This is, however, not a serious concern since the subregion is only of very small spatial extent and the intensity variation can be assumed to be slow varying within the subregion. Once the average intensity over a small region at the four comers are obtained, a bilinear surface $g(i,j)$ can be constructed. Let the subregion $w$ be indexed by row from 1 to $r$ and column from 1 to $c$. Given the intensity at the four corner points $z_1$, $z_2$, $z_3$, $z_4$, where $g(1,1) = z_1$, $g(r,1) = z_2$, $g(r,c) = z_3$, $g(1,c) = z_4$, the bilinearly interpolated surface is given by

$$g(i,j) = \frac{(r\text{-}i)(c\text{-}j)z_1 + (i\text{-}1)(c\text{-}j)z_2 + (i\text{-}1)(j\text{-}1)z_3 + (r\text{-}i)(j\text{-}1)z_4}{(r\text{-}1)(c\text{-}1)} \tag{10}$$

for $i \in [1,r]$, $j \in [1,c]$. The bilinear surface, with its mean set to zero, can then be subtracted from the original subregion $w$ to achieve background equalization. Background equalization is only applied to subregions not contaminated by artifacts, which can otherwise adversely affect the accuracy of the intensity estimation at the four comers.

The four comer values are obtained by averaging the values over a small region in each of the four comers. If any of the four comers is contaminated by artifacts, ie, has an unlikely large value, then background equalization is not perform on the subregions. Since it is hard to judge how different the four comer values maybe allowed to be before one can say that the subregion is contaminated by artifacts, it is preferable to use another criterion to set the threshold $t$. It is therefore required that the four corner values be all smaller than a threshold $t$ if background equalization is to be performed. The method computes the 75 percentile of the pixels' value within the subregion, and uses this value to be the threshold $t$. The percentile value is not affected by the absolute brightness of the spot, since it is a quantity obtained from the intensity distribution of the subregion. The rationale behind this threshold is as follows: In a subregion containing a spot, if the region is tight, ie, encloses the spot tightly, then about 70-80% of the pixels are spot pixels. Spot pixels, in general, have higher value than the background pixels, and pixels at the four comers are background pixels. Thus if any of the four corner values is larger than the 75 percentile, it is quite likely that the subregion is contaminated by artifacts, and background equalization should preferably not be performed since it may make performance worse than with no equalization at all.

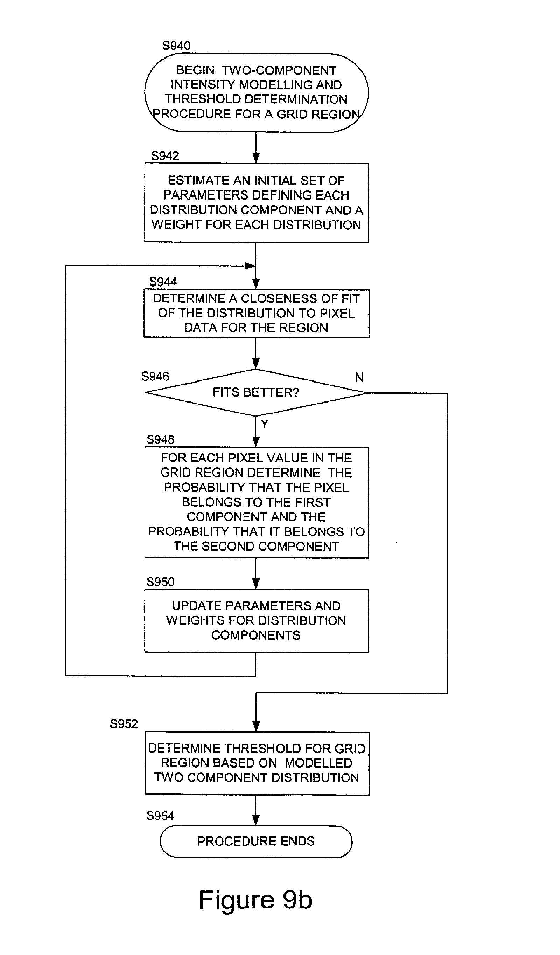

Figure 9b shows a flow diagram of an intensity modelling and threshold determination procedure for a grid region. The procedure begins at step S940 and at step S942 estimate an initial set of parameters defining a distribution for each component of the two component distribution, and a weight for each distribution, the overall distribution comprising a weighted sum of the two component distributions. Then, at step S944, the procedure determines how closely the actual pixel data for the region fits the assumed distribution and at step S946, tests whether the distribution is a better fit than that obtained from a previous iteration and if the fit is no better the procedure uses the modelled two component distribution to determine a threshold value for thresholding the grid region (step S952) and the procedure then ends at step S954. It will be appreciated that unless the initially calculated distribution is to be used for thresholding the procedure will not include step S952 on a first pass. If the test at step S946 shows that the fit of the distribution to the pixel values of the region is improving the procedure continues at step S948, for each pixel in the region determining probability that it belongs to the first component of the distribution and the probability that it belongs to the second component of the distribution, using these values to update parameters and weights for the distribution components at step S950 and then looping back to step S944 to redetermine a closeness of fit of the calculated distribution to the actual values.

Given a subregion, we need to assess whether a spot is present before performing spot segmentation. If a guide spot is present in the subregion, a spot is assumed present. Otherwise, a spot is assumed present if the ratio of the median intensity value of the tentative spot pixels and the background pixels is larger than a preset value. The tentative spot pixels are those pixels enclosed by a circular mask positioned optimally in the subregion w such that the difference between the mean pixel intensity value inside the mask and outside the mask is maximized. The radius of the circular mask is initially taken to be that of the ideal spot. If the ratio of the median intensity values is below the preset value, the radius of the mask is decreased until either the preset value is exceeded or the minimum allowable spot radius is reached.

When a spot is present, the intensity distribution of the pixels within the subregion is modeled using a 2-component Gaussian-Mixture Model defined by equation (11) below, although other distribution models may be employed.

$$G(x \mid \psi) = \sum_{i=1}^{2} \rho_i g_i(x \mid \omega_i)$$
$$= \rho_1 \frac{1}{\sqrt{2\pi\sigma_1^2}} e^{-\frac{(x-\mu_1)^2}{2\sigma_1^2}} + \rho_2 \frac{1}{\sqrt{2\pi\sigma_2^2}} e^{-\frac{(x-\mu_2)^2}{2\sigma_2^2}} \qquad (11)$$

where $\psi$ is a vector containing the model parameters $\{\mu_1, \mu_2, \sigma_1, \sigma_2, \rho_1\}$ and $\omega_i$ are the model parameters of each Gaussian component $g_i(x \mid \omega_i)$. The parameters $\mu_i$ and $\sigma_i^2$ are the mean and variance of the $i$-th Gaussian component $g_i(x \mid \omega_i)$, and $\rho_i$, satisfying $\Sigma_i \rho_i = 1$, is the weight of the Gaussian components. In the context of spot segmentation, the weight can be viewed as the ratio of foreground and background pixels. The log likelihood function of a Gaussian-Mixture Model with parameters $\psi$ and data $D = \{x_1, x_2, ... , x_N\}$ is given by

$$L(\psi) = \sum_{k=1}^{N} \log(G(x_k \mid \psi)) \qquad (12)$$

The log likelihood function measures how well the model defined by the parameters $\psi$ fits the given data set. The best fitting model is obtained by maximizing (12) with respect to the model parameters $\psi$. One method to obtain the maximum likelihood estimate of the model parameters $\psi$ is by the EM (Expectation-Maximization) algorithm [17]. In the context of finding an optimal Gaussian mixture model, the data is implicitly modeled as consisting of $k$ normally distributed classes. The EM algorithm alternately estimates the probability of the data points belonging to each of the $k$ classes using a previous estimate of the model parameters, and then updates the model parameters using the estimated class probability of the data points, until the log likelihood function of (12) fails to increase or when a specific number of iteration is reached.

The initial estimates of the model parameters $\psi$ can be obtained as follows. The weight $\rho_2 = 1 - \rho_1$ is estimated by the ratio of ideal spot area over the area of the subregion $w$. The means $\mu_1$ and $\mu_2$ are estimated from the 20 percentile (background) and the 90 percentile (foreground) of the intensity values within $w$, respectively. As the spot intensity has higher variation than the background intensity, we set the initial variances as $\sigma_2^2 = 2\sigma_1^2$. The pooled variance, i.e., $\sigma_p^2 = (\sigma_1^2 + \sigma_2^2) / 2 = 3\sigma_1^2 / 2$ is then set equal to the variance of $w$, to obtain $\sigma_1$ and $\sigma_2$. Given the initial model parameters, the probability that a point $x_k$ (that is, an intensity value $x$ for the $k$-th pixel) belongs to the $i$-th Gaussian component is computed by

$$p_i(x_k) = \frac{\rho_i g_i(x_k \mid \omega_i)}{\sum_{j=1}^{2} \rho_j g_j(x_k \mid \omega_j)} \tag{13}$$

Then, the model parameters are re-estimated by

$$\rho_i = \frac{1}{N} \sum_{k=1}^{N} p_i(x_k) \tag{14}$$

$$\mu_i = \frac{\sum_{k=1}^{N} x_k\, p_i(x_k)}{\sum_{k=1}^{N} p_i(x_k)} \tag{15}$$

$$\sigma_i^2 = \frac{1}{\sum_{k=1}^{N} p_i(x_k) - 1} \sum_{k=1}^{N} p_i(x_k)(x_k - \mu_i)^2$$

$$(16)$$

Figure 10 shows the optimum segmentation of a subregion using a 2-component Gaussian-Mixture model. The actual and estimated pdfs (probability density functions) of the subregion are shown in figure 11. It can be seen that the actual pdf is well-modeled by the 2-component Gaussian-Mixture model. The optimum threshold is given by the intersection of the two Gaussian components. Nevertheless, it is possible that the cDNA expression level is so low that the spot is heavily masked by random noise and cannot be reliably segmented from the background using Gaussian Mixture intensity modeling. Therefore, if the weight of the foreground region, $\rho_2$, deviates too much from the case of the ideal spot, i.e., when the foreground region is excessively larger or smaller than normal, or when the background and the foreground Gaussian components overlapped too much, i.e., $\mu_1 + k\sigma_1 > \mu_2$, for a small integer $k$ (typically $k = 1.5$ or 2), no spot is segmented from the subregion. However, a guide spot may exist in the subregion where the Gaussian-Mixture modeling failed. It means that a spot can still be differentiated from the background based on morphological properties. In this case, the connected component associated with the guide spot is treated as the segmented foreground region.

It could be that the determination of an optimum threshold by Gaussian Mixture intensity modeling seems redundant when a guide spot is already detected during the automatic gridding stage. However, since the adaptive thresholding and morphological opening operations described in Section 4.1 are only done at discrete intervals, the detected guide spot could be larger or smaller than the actual spot. For spot with good contrast, the intensity modeling will therefore provide a more refined spot segmentation than that given by the guide spot.

For large overlap between the foreground and background regions, the optimum threshold $T$ usually results in a set region that is too small in size. Spatial relationship between pixels can be used to correct for this undersegmentation. Specifically, when the threshold $T$ is within one standard deviation of the foreground mean, i.e., $T > \mu_2 - \sigma_2$, then the region of set pixels in the threshold image grows to include neighboring non-set pixels that are within one standard deviation from the foreground mean. The region growing process is realized by a series of morphological dilation.

A procedure for identifying a best fitting circle for a thresholded region will now be described. The moment of inertia for a circle of radius $r$ centered at the origin, with $f(x,y) = 1$ inside the circle and zero elsewhere, is given by

$$I_{circ} = 4 \int_0^r \int_0^{r\sqrt{1-(x/r)^2}} y^2 f(x,y) dy dx \quad = \frac{\pi}{4} r^4 \tag{19}$$

Given a binary image with foreground region (pixels with intensity 1) and background region (pixels with intensity 0), the best-fit circle is defined to be the circle whose moment of inertia equals to that of the foreground region. To find the best-fit circle, we first compute the centre of mass $(x_m, y_m)$ of the foreground region,

$$x_m = \frac{1}{N_f} \sum_x \sum_y x f(x,y)$$

$$y_m = \frac{1}{N_f} \sum_x \sum_y y f(x,y)$$

$$f(x,y) = \begin{cases} 1 & (x,y) \text{ in foreground region} \\ 0 & \text{otherwise} \end{cases}$$

$$\tag{20}$$

where $N_f$ is the number of pixels in the foreground region. Then, the moments of inertia of the foreground region along the horizontal and vertical directions are computed by

$$I_x = \sum_x \sum_y (x - x_m)^2 f(x,y)$$

$$I_y = \sum_x \sum_y (y - y_m)^2 f(x,y) \tag{21}$$

Let the moment of inertia of the circle, $I_{circ}$, be given by $I_{circ} = 0.5^* (I_x + I_y)$ (note that for a circular foreground region, $I_{circ} = I_x = I_y$ ). Using (19), the radius of the best-fit circle, centered at $(x_m, y_m)$ , can be obtained by

$$r = \left( \frac{4 I_{circ}}{\pi} \right)^{1/4} \tag{22}$$

The best-fit circle may enclose unwanted protrusions or artifacts. To exclude those erroneous regions, the computation of the best-fit circle is iterated, each time re-setting the foreground region not included in the previous best-fit circle to background region, until $r$ and $(x_m, y_m)$ remain constant between two iterations.

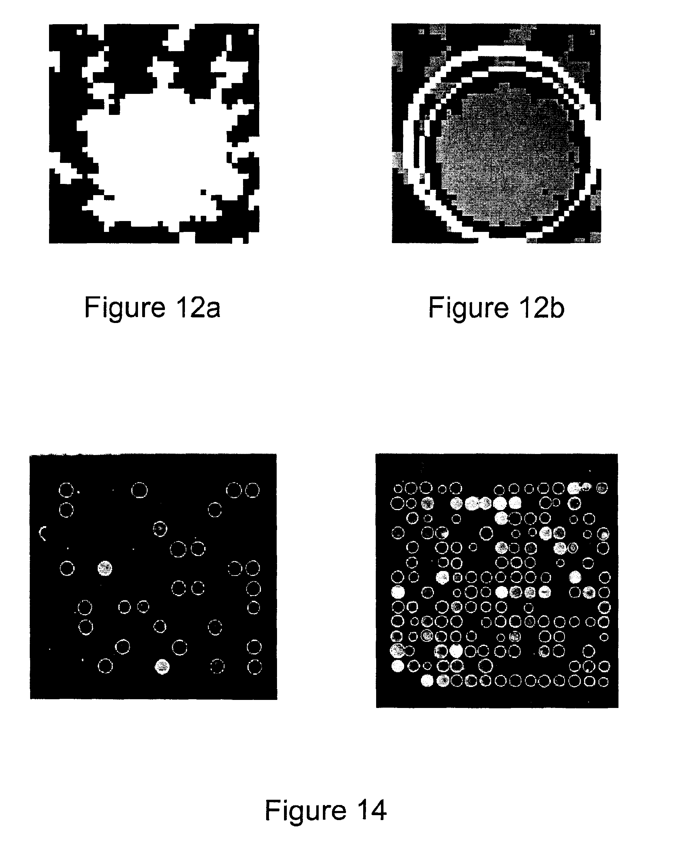

Figure 12(a) shows the foreground region thresholded from a subregion. Figure 12(b) shows a best-fit circle computed on the thresholded foreground region. The black circle is the final fit, which is obtained after 3 iterations of circle fitting. The best-fit circle has successfully captured the foreground region corresponding to the actual spot while excluding erroneous protrusions.

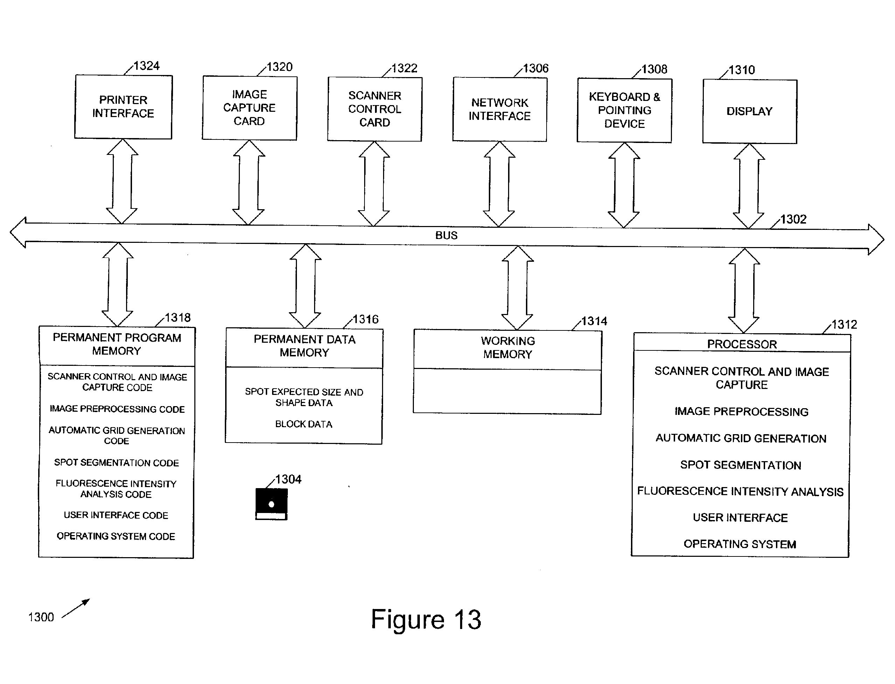

Figure 13 shows a general purpose computer system 1300 programmed to implement the above described methods. The computer system includes a data and control bus 1302 to which is connected a processor 1312, working memory 1314, data memory 1316 and program memory 1318. Also connected to bus 1302 is a display 1310 and keyboard and pointing device 1308 to provide a user interface, a network interface card 1306 for interfacing to a local area network for exchange of data with other devices such as automated biological laboratory equipment, a scanner control card 1322, for example SCSI (small computer systems interface card), for interfacing with microarray scanner 22 of figure 1 a and an image capture card 1320 for capturing an image scanner 22, and a printer interface 1324 for providing a hard copy output. The automated laboratory apparatus may comprise, for example, apparatus for preparing a sample for analysis or apparatus for processing the data provided by analysis of a microarray image, for example for therapeutic targets or biomarker identification.

At the program memory 1318 and the data memory 1316 is preferably non-violatile and the program code in the program memory and/or the data in the data memory may be written to and/or read from a portable storage media, illustratively shown by floppy disk 1304. The permanent program memory 1318 includes operating code (for example Microsoft Windows, trade mark) user interface code, fluorescence intensity analysis code (optional), spot segmentation code, automatic grid generation code, image preprocessing code, and scanner control and image capture code (optional). This code is implemented by processor 1312 to provide corresponding functions as described above. The data memory 1316 stores block segmentation data, where available, to define a configuration of blocks on the microarray, and expected size and shape data for a fluorescence spot of the microarray. Working memory 1314 is used by a processor 1312 for temporary calculations and data storage. The code in program memory may comprise in any conventional program language or may comprise instructions in a dedicated image processing language. In one coded embodiment visual C++ was employed.

Computer system 1300 is suitable for directly interfacing with a microarray scanner such as the scanner illustrated in figure 1a. In other embodiments an image data input to the computer system may be provided via a portable storage or a computer network and image capture and scanner control card 1320, 1322 dispensed with. With this embodiment images may be provided to the computer system in a standard form, for example TIFF, to allow microarray image data from a range of different scanners to be processed. Alternatively the facility may be provided in addition to dedicated I/O hardware for a particular scanner.

Figure 14 shows two examples of results of image processing according to a combined automatic grid generation and spot segmentation as described above for DNA microarrays. The images of figure 14 were generated by first automatically generating a grid based upon adaptive thresholding and using shape and topological information via morphological processing to locate subregions containing a spot, following this pixel intensity in grid subregions was modelled using a two-component Gaussian mixture model and spots were then segmented based upon the above described best-fit circle computation. Unlike some prior art techniques this combination of methods required no initial user input to manually place a template grid close to the desired solution.

The main aim of a microarray experiment is to measure the differential expression of genes under different experimental conditions/stimuli. The image analysis of the microarray image is the first crucial step in this goal. Once the spot is segmented out accurately, intensities of the two fluorescent dyes on the spot can be measured. The general steps taken in the data analysis after spot segmentation is as follow:

(a) Obtain the spot (foreground) intensity and the background intensity (from the region surrounding the spot concerned) from both the cy3 and cy5 image. Perform background correction, say, by subtracting the background intensity from the foreground intensity. The motivation for background correction is the belief that a spot's measured intensity includes a contribution not due to the specific hybridization of the target to the probe. This could arise from non-specific hybridization and stray fluorescence emitted from other chemicals on the glass slide. Such contribution should be removed from the spot's measured intensity to obtain a more accurate quantification of hybridization. Since it is generally assumed that the foreground (i.e., the spot) and the background are equally affected by such artifact, it can be eliminated by subtracting from the spot's intensity an estimate of the local background intensity at the vicinity of the spot. The spot's intensity is usually taken to be the average value of the foreground pixels, whereas the background intensity is usually taken to be the median value of background pixels.

(b) Perform data normalization on the intensity values. The purpose of normalization is to adjust for any bias which arises from variation in the microarray process rather than from biological differences between the cDNA samples. The most common variation is the red-green bias due to the differences between the labeling efficiencies, the scanning properties of the two fluors, and the scanner settings. Positional variation of intensity on a slide may arise due to differences between the print-tips on the arrayer, variation over the course of the print-run or non-uniformity in the hybridization. Differences between slides may arise from differences in ambient conditions when the slides were prepared. It is necessary to normalize the spot intensities before any subsequent analysis is carried out.

(c) Obtain the log expression ratio from the two foreground intensities from the cy3 and cy5 channels. The log expression ratio data is usually arranged in the form of an expression matrix, where the row denotes genes, and the column denotes different experimental settings. Each element in the matrix denotes the differential expression of the corresponding gene to a particular experimental setting.

(d) Perform data analysis on the expression matrix using various data analysis tools. One such tool frequently use is cluster analysis, which aims to discover the structures within the data and to group genes into clusters according to their responses to different experimental stimuli, such that genes in the same clusters express similarly.

No doubt many effective alternatives will occur to the skilled person and it will be understood that the invention is not limited to the described embodiments but encompasses modifications within the spirit and scope of the claims appended hereto.

**Claims**

1. A method of processing a digital image input comprising data representing a plurality of spots to generate data for defining a grid to subdivide said image to substantially separate at least some of the spots, the method comprising:

   generating a sequence of thresholded digital images from said digital image input using a progressively reduced threshold for each successive thresholded image of the sequence;
   processing each of said thresholded images to removed components of said images not corresponding to potential spots;
   sequentially combining said processed thresholded images to form a combined image such that a spot in an image with a lower threshold is not included in said combined image if a corresponding spot in an image with a higher threshold is detected; and generating said grid data to substantially separate spots in said combined image.

2. A method as described in claim 1 wherein said processing of a thresholded image comprises a morphological reconstruction operation

3. A method as claimed in claim 2 wherein said processing of a thresholded image further comprises performing a morphological opening operation following said reconstruction operation.

4. A method as claimed in claim 3 wherein said processing of a thresholded image further comprises convolving a said thresholded image with a shape corresponding to an expected spot shape prior to morphological reconstruction.

5. A method as claimed in any preceding claim wherein generating a said thresholded digital image comprises performing an adaptive threshold operation on said input image by moving a window across said input image and thresholding said input image using a threshold dependent upon pixel values within said window.

6. A method of processing a digital image input comprising data representing a plurality of spots to generate data for defining a grid to subdivide said image to substantially separate at least some of the spots, the method comprising:

   generating a guide spot image by operating on data from said digital image input to perform a morphological reconstruction operation; and
   generating said grid data using guide spots in said guide spot image.

7. A method as claimed in claim 6 wherein said generating of a guide spot image further comprises:

   convolved data from said digital image input with an expected spot shape; and
   thresholding said convolving image prior to said reconstruction.

8. A method as claimed in claims 6 or 7 further comprising performing a morphological opening operation on said guide spot image.

9. A method as claimed in claim 8 further comprising performing an area filtering operation following said morphological reconstruction operation to remove spots of greater than a maximum size from said guide spot image.

10. A method as claimed in any one of claims 6 to 9 further comprising:

    performing a plurality of thresholding operations on data from said image input to provide a plurality of thresholded images;
    generating a plurality of said guide spot images from said plurality of thresholded images; and
    combining said thresholded images to form a combined image prior to generating said grid data.

11. A method as claimed in any preceding claim further comprising applying a rotational correction to said combined image prior to generating said grid data.

**12.** A method as claimed in any preceding claim wherein said grid data generating comprises:

determining a set of expected spot locations using detected spots in said combined image; and
generating said grid data using said expected spot locations, in particular further comprising:

assigning said detected spots in said combined image to grid positions dependent upon said expected spot locations; and
generating data for lines defining said grid positions using said detected spots.

**13.** A method as claimed in claim 12 further comprising removing from said combined image detected spots deviating from a said expected spot location by more than a permitted distance prior to generating said grid data.

**14.** A method as claimed in claim 12 or 13 wherein said expected spot location determination comprises, for each of two different directions, summing projections of said detected spots in said combined image onto a said direction, and determining coordinates of expected spot locations along said direction using said summed projections.

**15.** A method as claimed in any preceding claim further comprising using said grid data to determine boundaries for the spots in said input image.

**16.** A method of analysing an image of an array, the array comprising a regular pattern of biological material, the image comprising a pattern of spots, at least some of the spots having positions corresponding to positions of said biological material of said array, the method comprising generating data for defining a grid to subdivide said image to substantially separate at least some of the spots, as claimed in any preceding claim, and analysing said image using said grid, in particular wherein said array comprises a DNA microarray.

**17.** A method as claimed in claims 16 further comprising capturing a pair of images of said array and combining said pair of images to form said digital image input.

**18.** A method of determining the relative hybridisation of two cDNA samples comprising capturing fluorescence images from a DNA microarray corresponding to hybridisation of said two cDNA samples; combining said fluorescence images, processing said combined image to generate data for defining a grid to subdivide said image to substantially separate at least some of spots using the method of any one of claims 1 to 14, and using said grid to determine the relative hybridisation of said samples.

**19.** A digital image processing computer system for processing a digital image comprising data representing a plurality of spots to generate data for defining a grid to subdivide said image to substantially separate at least some of the spots, the computer system comprising:

a digital image input for said digital image data:

program memory for storing processor control code;
data memory for storing digital image data for processing; and
a processor coupled to said digital image import and to said program and data memory for implementing said processor control code, said code comprising code for controlling said processor to:

generate a sequence of thresholded digital images from said digital image input using a progressively reduced threshold for each successive thresholded image of the sequence;
process each of said thresholded images to remove components of said images not corresponding to potential spots;
sequentially combine said processed thresholded images to form a combined image such that a spot in an image with a low threshold is not included in said combined image if a corresponding spot in an image with a higher threshold is detected; and
generate said grid data to substantially separate spots in said combined image

**20.** A computer system as claimed in claim 19 for processing a digital image of a microarray, wherein said code further comprises code to process said microarray image using said grid.

**21.** A method of processing a region of a digital image to classify pixels in the region, the method comprising:

assuming an initial pixel value distribution for pixels within the region;

Fitting the initial distribution to the image region by determining a measure of a closeness of fit of said distribution to actual values of pixels within the region and modifying said distribution to improve said closeness of fit; determining from said fitted distribution a threshold value for classifying said pixels; and classifying said pixels in said region using said threshold value.

22. A method as claimed in claim 21 wherein said classifying classifies said pixels as foreground and background pixels, and wherein said distribution comprises a two component intensity distribution.

23. A method as claimed in claim 22 wherein said distribution comprises two substantially Gaussian components for said foreground and background pixels.

24. A method as claimed in claim 21,22 or 23 wherein said closeness of fit measure comprises a combined likelihood value of the pixels of the region having their actual values given said two component distribution.

25. A method as claimed in any of claims 21 to 24 wherein said distribution modifying comprises modifying one or more parameters selected from a weight, mean and standard deviation for each component of said two-component distribution.

26. A method of processing a region of a digital image containing a spot to determine a boundary for said spot, the method comprising:

classifying pixels in said image region into foreground and background pixels using the method of any one of claims 21 to 25 to determine a foreground region associated with said spot; and determining a boundary for said foreground region.

27. A method as claimed in claim 26 wherein said determining of a boundary comprises fitting an expected spot shape to said foreground region, in particular further comprising setting pixels of portions of said foreground region outside said fitted expected spot shape to background values to provide a modified foreground region, and refitting said expected spot shape to said modified foreground region.

28. A method as claimed in claim 26 or 27 further comprising growing said foreground region prior to determining said boundary.

29. A method as claimed in any one of claims 21 to 28 further comprising performing a background equalisation operation on said region prior to said classifying.

30. A method of processing an image of an array, the array comprising a regular pattern of biological material, the image comprising a pattern of spots, at least some of the spots having positions corresponding to positions of said biological material of said array, the method comprising:

subdividing said image into a plurality of regions each potentially containing a said spot; and processing ones of said regions expected to contain a spot according to the method of any one of claims 21 to 29, in particular wherein said array comprises a DNA microarray.

31. A method as claimed in claim 30 wherein said image comprises a fluorescence image of said microarray, the method further comprising analysing said image of said array to determine fluorescence levels of said spots.

32. A method as claimed in claims 30 or 31 further comprising capturing a pair of images of said array and combining said pair of images to form said digital image for processing.

33. A method of determining the relative hybridisation of two cDNA samples comprising capturing fluorescence images from DNA microarray carrying information corresponding to hybridisation two cDNA samples; combining said fluorescence images, generating a grid to subdivide said image into a plurality of regions each potentially containing a fluorescence spot, processing ones of said regions expected to contain a spot according to the method of any one of the claims 21 to 29, and using a result of said processing to evaluate the relative hybridisation of said samples.

**34.** A method of identifying a biomarker or biotarget using the method of claim 18 or 33.

**35.** A digital image processing computer system for processing a region of a digital image to classify pixels in the region, the computer system comprising:

a digital image input for digital image data;
program memory for storing processor control code;
data memory for storing digital image data for processing; and
a processor, coupled to said digital image input and to said program and data memory for implementing said processor control code, said code comprising code for controlling processor to:

assume an initial pixel value distribution for pixels within the region;
fit the initial distribution to the image region by determining a measure of a closeness of fit of said distribution to actual values of pixels within the region and modifying said distribution to improve said closeness of fit;
determine from said fitted distribution a threshold value for classifying said pixels; and
classify said pixels in said region using said threshold

**36.** A computer system for processing a digital image of a microarray, the system comprising:

a digital image input for digital image data;
program memory for storing processor control code;
data memory for storing digital image data for processing; and
a processor, coupled to said digital image input and to said program and data memory for implementing said processor control code, said code comprising code for controlling processor as claimed in claim 35 to classify pixels in a plurality of regions of said image to locate spots within said regions for further processing.

**37.** A microarray scanner comprising the computer system of claim 20 or 36.

**38.** A digital image processing computer system for processing a digital image comprising data representing a plurality of spots to generate data for defining a grid to subdivide said image to substantially separate at least some of the spots, the computer system comprising:

a digital image input for said digital image data:

program memory for storing processor control code;
data memory for storing digital image data for processing; and
a processor coupled to said digital image input and to said program and data memory for implementing said processor control code, said code comprising code for controlling said processor to:

generate a guide spot image by operating on data from said digital image input to perform a morphological reconstruction operation; and
generate said grid data using guide spots in said guide spot image.

**39.** A method of processing data for a digital image, in particular of a microarray, said image comprising blocks of substantially regularly placed spots; the method comprising:

processing said image data to generate data for a binary image, pixels of said binary image having one of two values
generating spot profile projection data using said binary image data, said projection data comprising a representation of a projection of said spots onto at least one axis; and
determining block position data from said projection data by searching for a substantially regularly spaced group of spikes in said projection data, said block postion data defining a position of one or more said blocks along said axis.

**40.** A digital image processing computer system processing data for a digital image, in particular of a microarray, said image comprising blocks of substantially regularly placed spots, the system comprising:

a digital image input for said digital image data:

program memory for storing processor control code;
data memory for storing digital image data for processing; and
a processor coupled to said digital image input and to said program and data memory for implementing said processor control code, said code comprising code for controlling said processor to:

process said image data to generate data for a binary image, pixels of said binary image having one of two values;
generate spot profile projection data using said binary image data, said projection data comprising a representation of a projection of said spots onto at least one axis; and
determine block position data from said projection data by searching for a substantially regularly spaced group of spikes in said projection data, said block postion data defining a position of one or more said blocks along said axis.

**41.** Computer program code to, when running, implement the method of any one of claims 1 to 17, 21 to 32 and 39.

**42.** A carrier carrying the computer program code of claim 41.

Figure 1a
(PRIOR ART)

S100
INPUT IMAGE(S) FROM
MICROARRAY SCANNER

S102
COMBINE INPUT IMAGES AND
PREPROCESS

BEGIN AUTOMATIC GRID
GENERATION

S104
PERFORM ADAPTIVE
MORPHOLOGICAL SPOT
DETECTION ON COMPOSITE
PREPROCESSED IMAGE

S106
APPLY ROTATION
CORRECTION

S108
ESTIMATE HORIZONTAL AND
VERTICAL SPOT
SEPARATIONS AND REMOVE
NON-CONFORMING SPOTS

S110
GENERATE GRID

S110a
OUTPUT GRID DATA

PERFORM SPOT
SEGMENTATION FOR EACH
SPOT-CONTAINING GRID
REGION

S112
PERFORM BACKGROUND
EQUALISATION ON
COMPOSITE PREPROCESSED
IMAGE

S111
OPTIONAL INPUT OF
GRID DATA

S114
MODEL GRID REGION
INTENSITY DISTRIBUTION AND
THRESHOLD GRID REGION

S116
FIT CIRCLE TO FOREGROUND
OF GRID REGION

S116a
OUTPUT SPOT
SEGMENTATION DATA

S118
ANALYSE AND OUTPUT SPOT
PIXEL INTENSITIES

# Figure 1b

Figure 1c

Figure 1d

Figure 2a

Figure 2b

Figure 2c

Figure 2d

Figure 2e

Figure 2f

Figure 2g

Figure 2h

Figure 2i

Figure 2j

Figure 2k

Figure 2l

## Figure 2m

## Figure 2n

## Figure 2o

Figure 2p

Figure 2q

Figure 2r

Figure 2s

Figure 2t

Figure 2u

Figure 2w

Figure 2x

Figure 2v

Figure 2y

S300

BEGIN ADAPTIVE
MORPHOLOGICAL SPOT
DETECTION ON COMPOSITE
PREPROCESSED IMAGE

S302

PERFORM ADAPTIVE LOCAL
THRESHOLDING ON COMPOSITE
PREPROCESSED IMAGE USING A
SEQUENCE OF THRESHOLDS TO
GENERATE A SEQUENCE OF
THRESHOLDED IMAGES

S304

CONVOLVE EACH THRESHOLDED
IMAGE WITH A DISK AND
THRESHOLD TO GENERATE
MARKER IMAGE

S306

APPLY MORPHOLOGICAL
RECONSTRUCTION OPERATON

S308

APPLY MORPHOLOGICAL OPENING
OPERATON

S310

FILTER TO REMOVE LARGER THAN
ALLOWABLE AREA PATCHES

S312

SEQUENTIALLY COMBINE
PROCESSED SEQUENCE OF
IMAGES, HIGHEST THRESHOLD
FIRST, RETAINING ONLY
PREVIOUSLY UNDETECTED SPOTS
IN LOWER THRESHOLD IMAGES TO
DETERMINE A COMBINED SET OF
SPOTS

S314

OUTPUT COMBINED SET OF
DETECTED SPOTS FOR GUIDE
SPOTS

Figure 3

Figure 4a

Figure 4b

Figure 4c

Figure 4d

Figure 4e

Figure 4f

Figure 5

S600

BEGIN SPOT SEPARATION
ESTIMATION PROCEDURE

S602

DETERMINE MINIMUM SPOT
SEPARATION

S604

DETERMINE INITIAL ESTIMATE OF
SPOT POSITIONS BY DETERMINING
INITIAL SPOT SEPARATION AND
OFFSET ESTIMATES FROM
DETERMINED MIMIMUM SPOT
SEPARATION

S606

PROJECT SPOTS ONTO FIRST
DIRECTION AXIS AND SUM

S608

DETERMINE WEIGHTED SUM OF
DIFFERENCE BETWEEN
PROJECTED POSITIONS AND
ESTIMATED POSITIONS

S610

ADJUST ESTIMATED SPOT
POSITIONS BY ADJUSTING SPOT
SEPARATION AND OFFSET
ESTIMATES TO MINIMISE
WEIGHTED SUM TO ESTIMATE
SPOT SEPARATION ALONG THE
FIRST DIRECTION

S612

REPEAT FOR SECOND DIRECTION

S614

OUTPUT SPOT SEPARATION
ESTIMATES FOR FIRST AND
SECOND DIRECTIONS

Figure 6

Figure 7

Figure 8

S900
BEGIN SPOT SEGMENTATION
PROCEDURE

S902
SELECT REGION DEFINED BY GRID

S904
PERFORM BACKGROUND
EQUALISATION OF REGION

S906
GUIDE SPOT IN REGION?

Y

N

S908
MEDIAN INTENSITY OVER
THRESHOLD?

N

Y

S910
FIT TWO-COMPONENT INTENSITY
MODEL AND THRESHOLD IMAGE TO
SEGMENT FOREGROUND AREA

S912
NOISY SPOT?

N

Y

S914
GUIDE SPOT IN REGION?

N

Y

S915
NO SPOT
IDENTIFIED

S916
TREAT GUIDE SPOT AS
SEGMENTED FOREGROUND AREA

S918
FIT EXPECTED SPOT SHAPE

S920
MORE GRID REGIONS?

Y

N

S922
SPOT SEGMENTATION
COMPLETE

Figure 9a

S940

BEGIN TWO-COMPONENT
INTENSITY MODELLING AND
THRESHOLD DETERMINATION
PROCEDURE FOR A GRID REGION

S942

ESTIMATE AN INITIAL SET OF
PARAMETERS DEFINING EACH
DISTRIBUTION COMPONENT AND A
WEIGHT FOR EACH DISTRIBUTION

S944

DETERMINE A CLOSENESS OF FIT
OF THE DISTRIBUTION TO PIXEL
DATA FOR THE REGION

S946

FITS BETTER?    N

Y

S948

FOR EACH PIXEL VALUE IN THE
GRID REGION DETERMINE THE
PROBABILITY THAT THE PIXEL
BELONGS TO THE FIRST
COMPONENT AND THE
PROBABILITY THAT IT BELONGS TO
THE SECOND COMPONENT

S950

UPDATE PARAMETERS AND
WEIGHTS FOR DISTRIBUTION
COMPONENTS

S952

DETERMINE THRESHOLD FOR GRID
REGION BASED ON MODELLED
TWO COMPONENT DISTRIBUTION

S954

PROCEDURE ENDS

# Figure 9b

Figure 10a

Figure 10b

Figure 11

Figure 12a

Figure 12b

Figure 14

Figure 13

## EUROPEAN SEARCH REPORT

**European Patent Office**

**Application Number**

EP 03 25 1050

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| Y | EP 1 162 572 A (AGILENT TECHNOLOGIES INC A DEL) 12 December 2001 (2001-12-12)<br><br>* page 13, line 18 - line 28; claims 1,4,9,10 * | 1,2,6, 19,38, 41,42 | G06T7/00 |
| Y | * page 3, line 52 - line 56 *<br>* page 8, line 57 - page 9, line 40 * | 39,40 | |
| Y | BRIGHT D S: "AN OBJECT-FINDER FOR DIGITAL IMAGES BASED ON MULTIPLE THRESHOLDS, CONNECTIVITY, AND INTERNAL STRUCTURE" JOURNAL OF COMPUTER-ASSISTED MICROSCOPY, PLENUM PRESS, NEW YORK, NY, US, vol. 1, no. 4, December 1989 (1989-12), pages 307-329, XP008007968 ISSN: 1040-7286 * figures 6,7 * | 1,2,6, 19,38, 41,42 | |
| A | WO 01 06395 A (GSI LUMONICS LIFE SCIENCE TRUS ;YANG JUN (CN); NOBLETT DAVID A (US) 25 January 2001 (2001-01-25) * page 3, line 4 - line 14 * | 1,6,19, 38,41,42 | **TECHNICAL FIELDS SEARCHED (Int.Cl.7)** |
| X | . | 6,38 | G06T |
| A | WO 01 69534 A (CORNING INC) 20 September 2001 (2001-09-20) * the whole document * | 1 | |
| A | WO 99 08233 A (RAMM PETER ;SUN GANG (CA); IMAGING RESEARCH INC (CA)) 18 February 1999 (1999-02-18) * figure 8 * | 1,6,19, 38,41,42 | |
| Y | US 5 719 953 A (YASUKAWA YUSUKE ET AL) 17 February 1998 (1998-02-17) * claims 1,9 * | 39,40 | |

-/--

The present search report has been drawn up for all claims

| Place of search | Date of completion of the search | Examiner |
|---|---|---|
| THE HAGUE | 1 April 2004 | Chateau, J-P |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## EUROPEAN SEARCH REPORT

European Patent Office

Application Number

EP 03 25 1050

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | US 6 064 762 A (HAENEL WALTER) 16 May 2000 (2000-05-16) * column 8, line 39 - column 10, line 15 * | 21-23,25 | |
| | | | TECHNICAL FIELDS SEARCHED (Int.Cl.7) |

The present search report has been drawn up for all claims

| Place of search | Date of completion of the search | Examiner |
|---|---|---|
| THE HAGUE | 1 April 2004 | Chateau, J-P |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

European Patent
Office

Application Number

EP 03 25 1050

## CLAIMS INCURRING FEES

The present European patent application comprised at the time of filing more than ten claims.

☐ Only part of the claims have been paid within the prescribed time limit. The present European search report has been drawn up for the first ten claims and for those claims for which claims fees have been paid, namely claim(s):

☐ No claims fees have been paid within the prescribed time limit. The present European search report has been drawn up for the first ten claims.

## LACK OF UNITY OF INVENTION

The Search Division considers that the present European patent application does not comply with the requirements of unity of invention and relates to several inventions or groups of inventions, namely:

see sheet B

☒ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☐ None of the further search fees have been paid within the fixed time limit. The present European search report has been drawn up for those parts of the European patent application which relate to the invention first mentioned in the claims, namely claims:

**European Patent Office**

**LACK OF UNITY OF INVENTION
SHEET B**

Application Number

EP 03 25 1050

The Search Division considers that the present European patent application does not comply with the requirements of unity of invention and relates to several inventions or groups of inventions, namely:

1. Claims: 1-20,34,37,38,41,42

   A method of processing a digital image input comprising data representing a plurality of spots to generate data for defining a grid to subdivide said image to substantially separate at least some of the spots

2. Claims: 21-33,35,36

   A method of processing a region of a digital image to classify pixels in the region

3. Claims: 39,40

   A method of processing data for a digital image, in particular of a microarray, said image comprising blocks of substantially regularly placed spots

## ANNEX TO THE EUROPEAN SEARCH REPORT
## ON EUROPEAN PATENT APPLICATION NO.

EP 03 25 1050

This annex lists the patent family members relating to the patent documents cited in the above-mentioned European search report.
The members are as contained in the European Patent Office EDP file on
The European Patent Office is in no way liable for these particulars which are merely given for the purpose of information.

01-04-2004

| Patent document cited in search report | | Publication date | Patent family member(s) | | Publication date |
|---|---|---|---|---|---|
| EP 1162572 | A | 12-12-2001 | US<br>EP<br>US | 6591196 B1<br>1162572 A2<br>2002193962 A1 | 08-07-2003<br>12-12-2001<br>19-12-2002 |
| WO 0106395 | A | 25-01-2001 | WO | 0106395 A2 | 25-01-2001 |
| WO 0169534 | A | 20-09-2001 | AU<br>WO<br>US | 4203101 A<br>0169534 A2<br>2003198385 A1 | 24-09-2001<br>20-09-2001<br>23-10-2003 |
| WO 9908233 | A | 18-02-1999 | AU<br>CA<br>WO<br>EP<br>JP<br>US | 8846498 A<br>2299325 A1<br>9908233 A1<br>1002297 A1<br>2001512875 T<br>6345115 B1 | 01-03-1999<br>18-02-1999<br>18-02-1999<br>24-05-2000<br>28-08-2001<br>05-02-2002 |
| US 5719953 | A | 17-02-1998 | JP<br>JP | 3237975 B2<br>7085286 A | 10-12-2001<br>31-03-1995 |
| US 6064762 | A | 16-05-2000 | DE<br>WO<br>JP<br>JP | 4445386 C1<br>9619778 A1<br>9503329 T<br>3078844 B2 | 02-05-1996<br>27-06-1996<br>31-03-1997<br>21-08-2000 |

EPO FORM P0459

For more details about this annex : see Official Journal of the European Patent Office, No. 12/82